# EUROPEAN PATENT APPLICATION

(11) **EP 4 625 917 A1**
(43) Date of publication of application: **01.10.2025**
(21) Application number: 25166246.6
(22) Date of filing: 26.03.2025
(51) Int. Cl.: H04L 27/26, H04W 52/02

(54) **SYSTEM AND METHODS FOR LOW POWER WAKE-UP AND SYNCHRONIZATION SIGNAL OPERATIONS**

(30) Priority: 26.03.2024 US 202463569821 P; 24.10.2024 US 202463711355 P
(71) Applicant: Samsung Electronics Co., Ltd., Suwon-si, Gyeonggi-do 16677 (KR)
(72) Inventor: FOUAD, Yaser Mohamed Mostafa Kamal, San Jose, CA, 95134 (US); HOSSEINIAN, Seyed Mohsen, San Jose, CA, 95134 (US); ZHOU, Yuhan, San Jose, CA, 95134 (US); SARTORI, Philippe Jean Marc Michel, San Jose, CA, 95134 (US)
(74) Representative: Kuhnen & Wacker Patent- und Rechtsanwaltsbüro PartG mbB

(57) **Abstract**

A system and a method are disclosed for low-power wake up signaling and reception for main radio wake-up and power saving. The system and method may relate to receiving, by a user equipment (UE), a communication signal, the communication signal comprising first data in an on-off keying (OOK) format and second data in an overlaid orthogonal frequency division multiplexing (OFDM) format; determining, by the UE, a low-power wake up signal (LP-WUS) by decoding the communication signal, wherein the LP-WUS is determined at least by decoding the second data in the overlaid OFDM format; and activating, by the UE, based on the determined LP-WUS, a main radio for receiving wireless communications.

## Description

### TECHNICAL FIELD

The disclosure generally relates to new radio (NR) channel communications. More particularly, the subject matter disclosed herein relates to improved NR communication systems and protocols for low-power wake-up signals (LP-WUS) and synchronization for wireless devices.

### BACKGROUND

Wireless communications protocols such as fifth generation mobile communications (5G) play a key role for improving data link reliability and performance in data exchange between devices, enabling the realization of a wide spectrum of applications. As the complexity of device communications increases with each 5G standard release, the energy efficiency of user-end devices (also known as User Equipment, or UEs) becomes more critical, so as to allow these devices to facilitate intricate processes throughout longer time periods. In particular, it is critical for 5G standards to reflect the importance of energy saving by prolonging the battery life of UE devices, as well as the life of the device itself in many cases (e.g., machine type communication, internet of things, etc.).

To keep up with rapidly evolving 5G communication paradigms, low-power wakeup receiver(s) (LP-WUR) became an important topic for consideration with the 3^{rd} Generation Partnership Project (3GPP), with the objective to consider and evaluate low-power wake-up receiver architectures and wake-up signal (WUS) designs. The importance of these paradigms was reiterated in recent standardizations, where consideration began of a design for LP-WUR that will work in conjunctions with NR main radio by allowing the main radio to enter a deep sleep mode for power saving.

In order to allow for LP-WUR function without sacrificing the regular operation of the NR main radio, one option is to include two distinct radios on a chip. For example, one radio in a UE (i.e., the LP-WUR) is dedicated to receiving and interpreting LP-WUS, with the major objective to wake-up the other main radio once a WUS is received from a source. In essence, the main radio will only be woken from a power-saving sleep upon the LP-WUR radio receiving a wake-up signal/packet and relaying some WUS to the main radio to being regular operation. The main radio may then perform more complex operations in wireless communications using higher-power configurations.

Due to the wake-up signal/packet typically adhering to a lower-complexity modulation scheme, especially when compared to the main radio, the LP-WUR receiver may be designed to operate at much lower power consumption than the main radio receiver. This will allow for power saving while the main radio enters a low-power and/or "sleep" mode while the LP-WUR receiver actively monitors for a "wake-up" signal to relay to the main radio.

However, LP-WUS-enabled hardware is only as powerful as the communication paradigms underscoring its design. Though a LP-WUR radio may be designed to operate with lower complexity signals, any theoretical power-saving must also be realized in the communication protocols that are processed by the hardware design. For example, existing 5G communication paradigms designed for main radio interactions may not be efficiently parsed by the LP-WUR radio, resulting in processing delays and major latency issues with 5G communications. Thus, there is a need for new methods and systems for 5G communications designed to enable new power-saving hardware configurations being actively developed for UE devices. These new methods and systems will control the operation of LP-WUR radios to ensure more efficient power-saving operations without sacrificing the usability of existing high-powered 5G protocols.

In various embodiments discussed herein, a method comprises receiving, by a user equipment (UE), a communication signal, the communication signal comprising first data in an on-off keying (OOK) format and second data in an overlaid orthogonal frequency division multiplexing (OFDM) format; determining, by the UE, a low-power wake up signal (LP-WUS) by decoding the communication signal, wherein the LP-WUS is determined at least by decoding the second data in the overlaid OFDM format; and activating, by the UE, based on the determined LP-WUS, a main radio for receiving wireless communications.

In some further embodiments, decoding the second data in an overlaid OFDM format comprises decoding at least a first portion of the second data based on data carried by one or more OFDM sequences and second portion of the second data based on a symbol position of the one or more OFDM sequences.

In some further embodiments, the method further comprises monitoring, by the UE, for a communication signal including data in an OOK format only; in response to receiving the communication signal comprising the first data in an OOK format, determining UE group identification data from among the first data; and in response to determining the UE identification data, monitoring for data in the overlaid OFDM format.

In some embodiments, monitoring for data in the overlaid OFDM format is performed only for pre-configured duration of time. In other embodiments, the method further comprises determining UE individual identification data from among the second data; and terminating monitoring for data in the overlaid OFDM format in response to determining the UE individual identification data.

In some embodiments, the method further comprises monitoring, by the UE, for a communication signal including data in an OOK format only; in response to receiving the communication signal comprising the first data in an OOK format, monitoring for data in an overlaid OFDM format; and determining, based on the LP-WUS, a paging occasion for the UE.

In some embodiments, the second data in the overlaid OFDM format comprises a plurality of OFDM sequences. In some further embodiments, two or more of the plurality of overlaid OFDM sequences contain distinct UE identification data; and the method further comprises determining, by the UE, that at least one overlaid OFDM sequence of the plurality of overlaid OFDM sequences contains UE identification data corresponding to the UE.

In some embodiments, the second data comprises one or more OFDM sequences in a Zadoff-Chu (ZC) sequence format. In some embodiments, the second data comprises one or more OFDM sequences mappable to one or more code points within a codeblock representing communication control signals.

In various embodiments, a method comprises receiving, by a user equipment (UE), a communication synchronization signal, the communication synchronization signal comprising first data in an on-off keying (OOK) format and second data in an overlaid orthogonal frequency division multiplexing (OFDM) format, wherein the first data comprises a binary sequence for device synchronization; and configuring, by the UE, based on the communication synchronization signal, one or more UE radios for downlink communications.

In some embodiments, the second data in the overlaid OFDM format comprises preamble sequence synchronization data; and the preamble sequence synchronization data comprises an indication of a first bit of the binary sequence for device synchronization. In some embodiments, the second data in the overlaid OFDM format comprises postamble sequence synchronization data; and the postamble sequence synchronization data comprises an indication of a final bit of the binary sequence for device synchronization.

In some embodiments, the second data comprises one or more overlaid OFDM sequences for configuring the one or more UE radios for downlink communications; and the UE is preconfigured with decoding data to decode the one or more overlaid OFDM sequences sent as part of the second data. In some embodiments, the second data comprises one or more overlaid OFDM sequences for configuring the one or more UE radios for downlink communications; and configuring the one or more UE radios for downlink communications is based only on the one or more overlaid OFDM sequences.

In some embodiments, the communication synchronization signal comprises a plurality of overlaid OFDM sequences in adjacent OOK symbols of the communication synchronization signal. In some embodiments, the second data in the overlaid OFDM format comprises one or more overlaid OFDM sequences in a Zadoff-Chu (ZC) sequence format.

In some embodiments, the second data in the overlaid OFDM format comprises one or more overlaid OFDM sequences; the method further comprises determining one or more downlink frequency estimations from the binary sequence for device synchronization and the one or more overlaid OFDM sequences; and configuring the one or more UE radios is further based on the one or more downlink frequency estimations. In some embodiments, the second data in the overlaid OFDM format comprises one or more overlaid OFDM sequences; and the one or more overlaid OFDM sequences comprises master information block (MIB) information for communicating with a base station.

In various embodiments, a method comprises sending, by a user equipment (UE), UE capability information corresponding to a capability of a low-power wake-up receiver (LP-WUR) radio to receive orthogonal frequency division multiplexing (OFDM) signals; receiving, by the UE, a low-power wake up signal (LP-WUS), the LP-WUS comprising first data in an on-off keying format and second data in an overlaid OFDM format, wherein the LP-WUS is based at least in part on the UE capability information; and activating, by the UE, based on the received LP-WUS, a main radio for receiving wireless communications.

In some embodiments, the method further comprises detecting, by the UE, a paging occasion (PO), wherein the UE is configured to receive information related to a downlink message during the paging occasion. In some embodiments, the second data in the overlaid OFDM format further comprises identity data corresponding to an intended UE; and the activation of the main radio is further based on a comparison between the identity data in the second data and identity data stored at the UE.

In some embodiments, the first data in the OOK format and the second data in the overlaid OFDM format both comprise a wake-up data sequence, the wake-up data sequence being parsable to cause activation of the main radio. In some embodiments, the first data in the OOK format comprises a first portion of the LP-WUS and the second data in the overlaid OFDM format comprises a second portion of the LP-WUS, the first portion and second portion being different and parsable in combinable to cause activation of the main radio.

In some embodiments, the method further comprises determining the UE capability information based at least in part one or more UE metrics indicating the UE capability to parse the second data in the overlaid OFDM format. In some embodiments, the one or more UE metrics includes a current power state of the LP-WUR; and the UE capability information indicates that the second data in the overlaid OFDM format is parsable by the UE when the LP-WUR is in a high-power state, and is not parsable by the UE when the LP-WUR is in a low-power state.

In some embodiments, the second data in the overlaid OFDM format further comprises random access channel (RACH) preamble information; and the method further comprises sending, by the UE, based on the RACH preamble information, a physical random-access channel (PRACH) uplink signal to a base station. In some embodiments, the second data in the overlaid OFDM format further comprises PO information related to a type of PO following the LP-WUS; and the method further comprises monitoring, by the UE and based on the PO information in the second data, either a dynamic paging occasion or a legacy paging occasion.

In some embodiments, the UE capability information further comprises information indicating a minimum processing time gap value; the received LP-WUS comprises data in one or more symbols; and each distance between each symbol of the one or more symbols is greater than or equal to the minimum processing time gap. In some embodiments, the method further comprises: determining, by the UE, a current connectivity state based on a possible connection with a base station; wherein the UE capability information comprises at least the current connectivity state and is sent via radio resource protocol (RRC) signaling; and wherein the first data and the second data are based on the current connectivity state.

In some embodiments the LP-WUS is a second LP-WUS; the method further comprises receiving a first LP-WUS; the UE does not activate the main radio in response to receiving the first LP-WUS based at least in part on a first current connectivity state of the UE; and the UE activates the main radio in response to the second LP-WUS based at least in part on a second current connectivity state of the UE that is different than the first current connectivity state. In some embodiments, the second data in the overlaid OFDM format comprises information about a plurality of POs and a plurality of PO offsets; the method further comprises mapping, by the UE, each PO of the plurality of POs to a local oscillator using the plurality of PO offsets; and the method further comprises monitoring, by the UE, each PO using the mapping to the local oscillator.

In various embodiments, a method comprises determining a first low-power wake up signal (LP-WUS) configuration for sending an activation signal to a user equipment (UE) device, the LP-WUS configuration including support for a first number of overlaid orthogonal frequency division multiplexing (OFDM) signals; receiving UE capability information corresponding to a capability of a UE to decode one or more OFDM signals; and dynamically adjusting, based on the received UE capability information, the first LP-WUS configuration to create a second LP-WUS configuration, wherein the adjustment comprises dynamically adjusting the number of overlaid OFDM signals to a second number that is different than the first number.

In some embodiments, the method further comprises generating and sending, based on the second LP-WUS configuration, a LP-WUS including the second number of overlaid OFDM signals. In some embodiments, the first LP-WUS configuration is pre-configured according to a bandwidth part (BWP) configuration of a radio resource protocol (RRC) environment. In some embodiments, the method further comprises sending an indication of the first LP-WUS configuration to one or more UEs. In some further embodiments, sending the indication of the first LP-WUS configuration to the one or more UEs further comprises indicating the first number of overlaid OFDM using an index, the index corresponding to a set of preconfigured values stored at the one or more UEs. In some other embodiments, sending the indication of the first LP-WUS configuration to the one or more UEs further comprises indicating the first number of overlaid OFDM using on-off keying (OOK) signaling.

It will be appreciated that a device, system, or other vehicle may be utilized to perform the methods above, include, but not limited to, UE device comprising one or more of: a low-power wake-up receiver (LP-WUR) radio including a processor; a main radio; a memory including instructions, wherein when the instructions are executed by the processor, the LP-WUR is configured perform the steps described herein.

### BRIEF DESCRIPTION OF THE DRAWING

In the following section, the aspects of the subject matter disclosed herein will be described with reference to exemplary embodiments illustrated in the figures, in which:
FIG. 1A, 1B, and 1C depict block diagrams illustrating example architectures for decoding a LP-WUR.
FIG. 2A and 2B depict block diagrams illustrating example architectures for a LP-WUR device.
FIG. 3A depicts a phase diagram for a LP-WUS utilizing information redundancy in both an On-Off Keying (OOK) modulation scheme and an overlaid orthogonal frequency division multiplexing (OFDM) sequence.
FIG. 3B depicts a phase diagram for a LP-WUS of increased payload size by utilizing both an OOK modulation scheme and an overlaid OFDM sequence.
FIG. 4 depicts a phase diagram for a LP-WUS incorporating an overlaid OFDM sequence.
FIG. 5 is a flowchart illustrating an example method for performing radio wake up based on a group ID and UE ID in a LP-WUS.
FIG. 6 is a flowchart illustrating an example method for monitored paging occasion (PO) selection based on information received from overlaid OFDM sequences.
FIG. 7 depicts a phase diagram for a LP-WUS incorporating an overlaid OFDM sequence.
FIG. 8 is a flowchart illustrating an example method for monitoring OFDM sequences for a pre-configured duration based on OOK symbols.
FIG. 9 depicts a phase diagram for a LP-WUS incorporating an overlaid OFDM sequence.
FIG. 10 is a flowchart illustrating an example method for monitoring OFDM sequences for a pre-configured duration based on OOK symbols.
FIG. 11 depicts a phase diagram for a LP-WUS incorporating an overlaid OFDM sequence.
FIG. 12 depicts a time chart showing the difference between a LP-WUS utilizing overlaid OFDM sequences and a LP-WUS utilizing only OOK symbols.
FIG. 13 depicts a time chart showing the difference between a LP-WUSR utilizing overlaid OFDM sequences and a LP-WUSR utilizing only OOK symbols.
FIG. 14 is a block diagram of an electronic device in a network environment 1500, according to an embodiment. The electronic device of FIG. 14 may perform the functions and embodiments described herein, such as those illustrated in FIGS. 1-13.
FIG. 15 shows a system including a UE and a gNB, in communication with each other.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it may be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "pre-configured" may refer to any combination of pre-configured or configured without specific limitation to the time period in which a method, system, device or instruction may be or have been configured.

### LOW POWER WAKE-UP RECEIVER ARCHITECTURES

Many LP-WUR architectures are designed to allow for energy-efficient operation by decoupling the main radio (the "high-power" and "high-complexity" radio) of a UE device from one or more separate LP-WUR radio(s). This allows the LP-WUR to monitor for signals while the main radio enters a power-saving mode. In 3GPP discussions, various architectures and designs have been proposed to achieve low complexity and low power consumption, while still maintaining appreciable performance in wireless signal exchange.

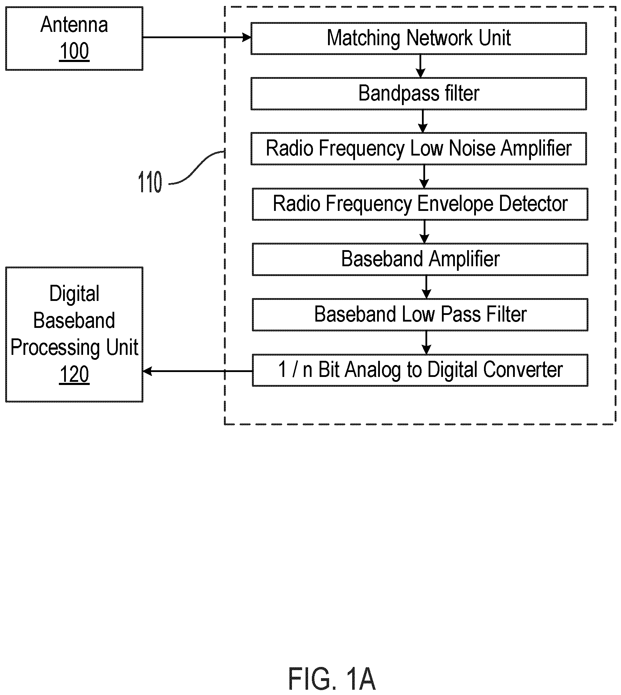

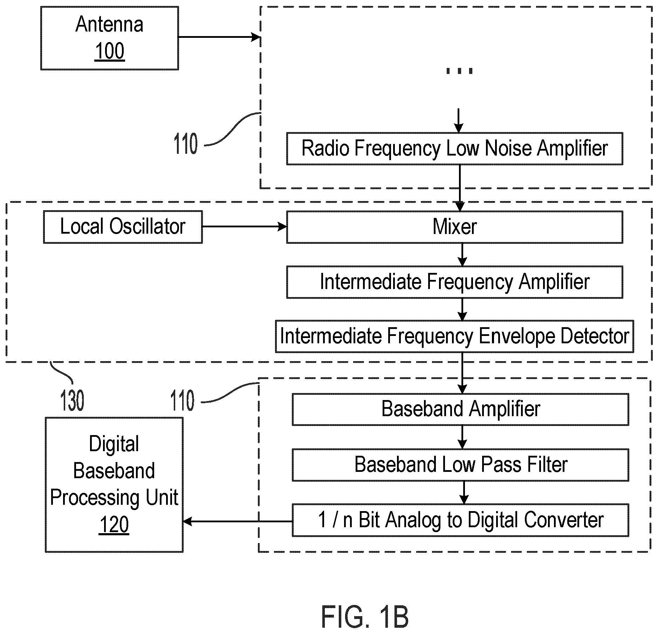

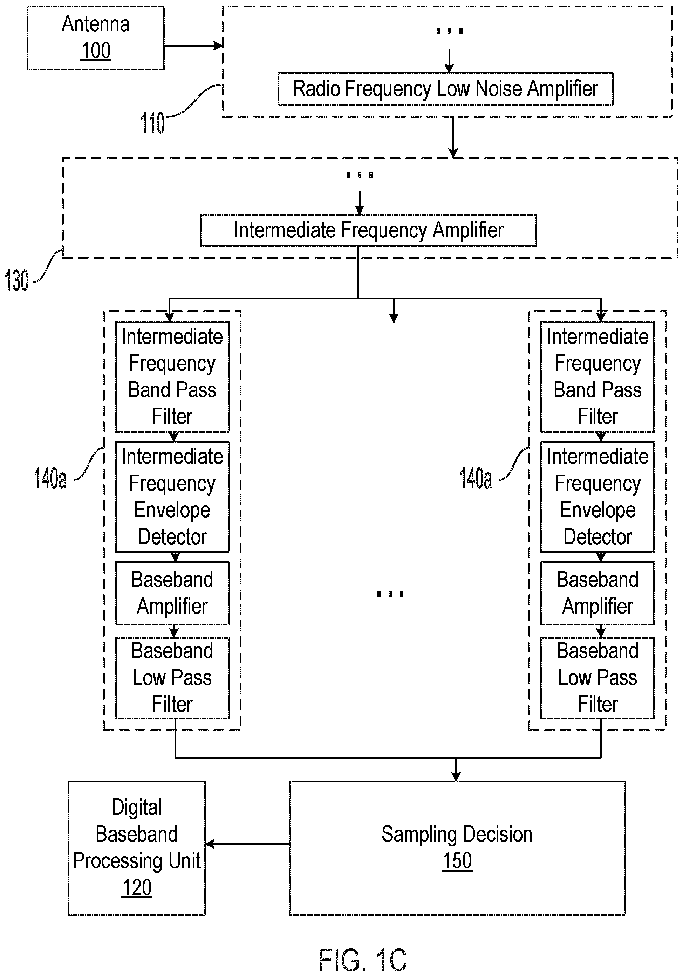

FIG. 1A, 1B, and 1C depict block diagrams illustrating example architectures for decoding a LP-WUR. In the architecture depicted in FIG. 1A, an RF signal is first received at antenna 100 and afterward converted into a baseband signal directly, via an RF envelope detection operation 110. The conversion is designed to replace the operation of a local oscillator or phase locked loop, in order to reduce power consumption and complexity. The baseband signal may then be sent to a digital baseband processing unit 120. As depicted in FIG. 1A, the RF envelope detection operation includes a matching network unit, a bandpass filter, a radio frequency low noise amplifier, a radio frequency envelope detector, a baseband amplifier, a baseband low-pass filter, and a 1 or multi-bit analog to digital converter. It will be appreciated that the RF envelope detection operation 110 depicted in FIG. 1A may comprise more or less parts depending on the requirements of the LP-WUS performing baseband conversion. In addition to the configuration shown in FIG. 1A, additional architectures for LP-WUS radios may be utilized.

One such example of an alternative LP-WUS configuration is shown in FIG. 1B, where a heterodyne architecture with intermediate frequency (IF) envelope detection may be utilized. As depicted in FIG. 1B, the configuration may further include a mixer component block 130 designed to combine the output of the radio frequency low noise amplifier with a local oscillator (LO) to produce an intermediate frequency signal that may be passed through an intermediate frequency band pass filter and an intermediate frequency envelope detector before being passed to the baseband amplifier. In some cases, this local oscillator may be mapped to a number of paging occasions (PO) for communication monitoring.

In another example depicted in FIG. 1C, Frequency shift keying (FSK)-based receivers may also be configured for LP-WUS detection and processing. As depicted in FIG. 1C, the architecture may include a split of the intermediate frequency signal output of the intermediate frequency amplifier that will be passed through two or more distinct IF processing elements 140a through 140n before a sampling decision block 150 will determine which digital baseband signal will be utilized in further steps. This architecture also includes a mixer to reduce the high RF frequency into a lower intermediate frequency.

There are also multiple possible waveform designs for NR LP-WUS operations that may be received and processed at a UE. Multiple waveform designs may be fashioned in the modulation scheme of OOK designs, for example. The waveform paradigms for LP-WUS operation may be modulation schemes such as OOK-1 and/or OOK-4. The modulation schemes may be considered in the following manner:
*OOK-1: Single-bit in 1 OFDM symbol, sub-carrier (SC) of LP-WUS are*
   - *OOK=1 means all SCs are modulated*
   - *OOK=0 means all SCs are zero power (from base-band point of view)*
*OOK-4: Transform M-bit OOK in time domain*
   - *N SCs of OOK-1 are generated by a transformation (DFT*/*Least square)*
   - *N' samples are generated from M-bits*
   - *signal modification may or may NOT be used*
   - *truncation or other additional modification may or may NOT be used, if not used, N is the same as N'*
   - *N' can be the same as K, the N' samples are then used as an input to the IFFT.*

### LOW POWER WAKE-UP RECEIVER OPERATION

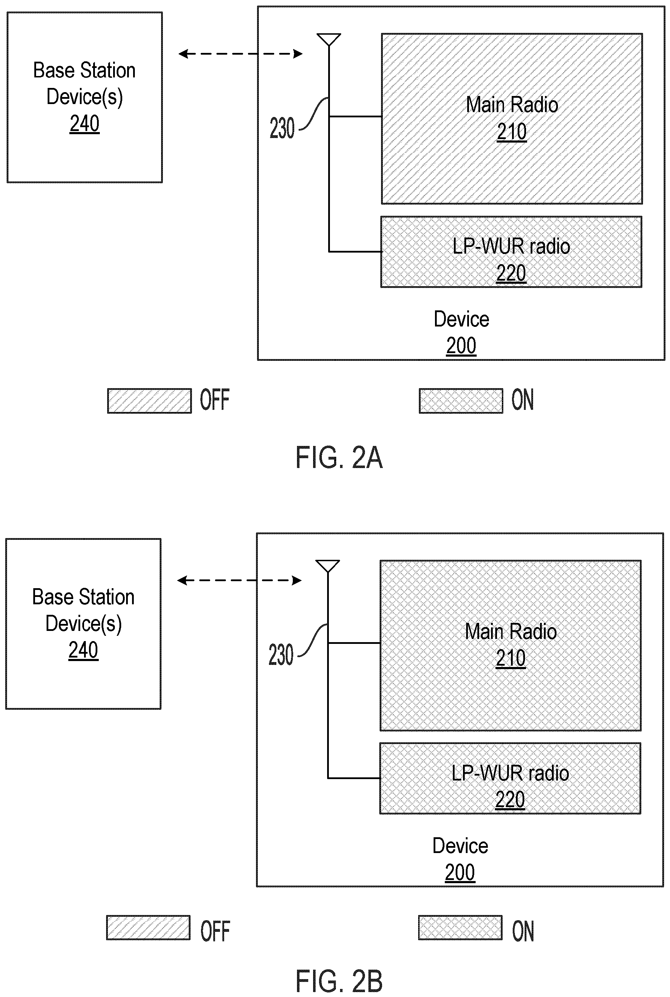

As discussed above, wireless communication devices may make use of a distinct LP-WUR radio(s) in addition to a main radio to facilitate LP-WUS operations. FIG. 2A and 2B depict block diagrams illustrating example architectures for a LP-WUR device. Particularly, FIG. 2A illustrates an example block diagram including two distinct radios to facilitate the low-power operations described herein. As illustrated in FIG. 2A, device 200 includes both a main radio 210 and a LP-WUR radio 220. Both radios may be connected to one or more antennas, such as shared antenna 230. The antenna 230 may be configured to receive one or more communication signals from one or more base station devices 240. It will be appreciated that in various embodiments, each radio may use its own distinct antenna or share an antenna with other components. As illustrated in FIG. 2A, the device is currently in a power-saving state, wherein the main radio 210 is turned off and the LP-WUR radio is on. In this configuration, the LP-WUR radio will remain in a low-power operation mode until it receives a "wake-up" packet, sequence, and/or signal at antenna 230 for activating main radio 210. Once this wake-up data sequence is recognized/ parsed by the main radio, the main radio will activate for normal functions.

FIG. 2B illustrates the same device 200 in a "woken-up" state, wherein the main radio 210 is no longer in a power-saving state, and is active for the performance of regular wireless communication facilitation. In this configuration, the LP-WUR radio may remain in the same "on" state, even after receiving the wake-up packet and/or signal. The device 200 may remain in this state depicted in FIG. 2B until a predetermined period of inaction, or trigger, causes the device 200 to revert to power-saving mode again, as depicted in FIG. 2A.

Multiple options may be considered for carrying the wake-up packet (payload) in the LP-WUS. In various embodiments, the OOK-1/4 modulation schemes may be used to carry a first portion of the payload for a WUS, while a second portion is carried by an overlaid OFDM sequence that is transmitted by a constant envelope sequence within the "on" portion(s) of the OOK signal. The result is an increase in the payload size that may be transmitted over the LP-WUS.

In other various embodiments, the same payload is sent and repeated in a transmission utilizing the OOK1/4 modulation scheme and the overlaid OFDM sequence. This will improve the reliability of the transmitted LP-WUS via redundancy, while also enabling more capable devices (i.e., devices with overlaid sequence detection capability) to detect the LP-WUS faster, and accordingly have longer sleep duration to save power.

In some embodiments, an overlaid OFDM sequence may be supported, in addition to OOK signaling. This overlaid sequence may be used to enhance the overall system performance (e.g., improve the peak to average power ratio). In other embodiments, assuming the presence of advanced receivers exist for LP-WUS reception, the overlaid OFDM sequence may be used to carry information bits of the LP-WUS payload from a base station (gNB) to the LP-WUR. Two examples of carrying information using the overlaid OFDM sequences are described below:
- *Option 1: OFDM sequence(s) carry a portion of X (i.e., the information payload).*
   *Within first N1 OFDM symbols of the LP-WUS (N1<N), M (i.e., the number of*
      *chips per CP-OFDM)*N1 OOK symbols carry a part of X, e.g., X1 (L1 bits), and*
   *remaining part of X (L-L1 bits) is carried by OFDM sequences within the first N1*
      *OFDM symbols. OFDM-based LP-WUR can obtain total X by detection of OFDM sequences, and the location of OFDM sequences or detection of OOK symbols in the first N1 OFDM symbols.*
- *Option 2: OFDM sequence(s) carry all of X (i.e., the information payload). Within first N1 OFDM symbols of the LP-WUS (N1<N), the whole X (L bits) is*
   *carried by OFDM sequence(s). OFDM-based LP-WUR can obtain total X by detection of OFDM sequences in the first N1 OFDM symbols.*

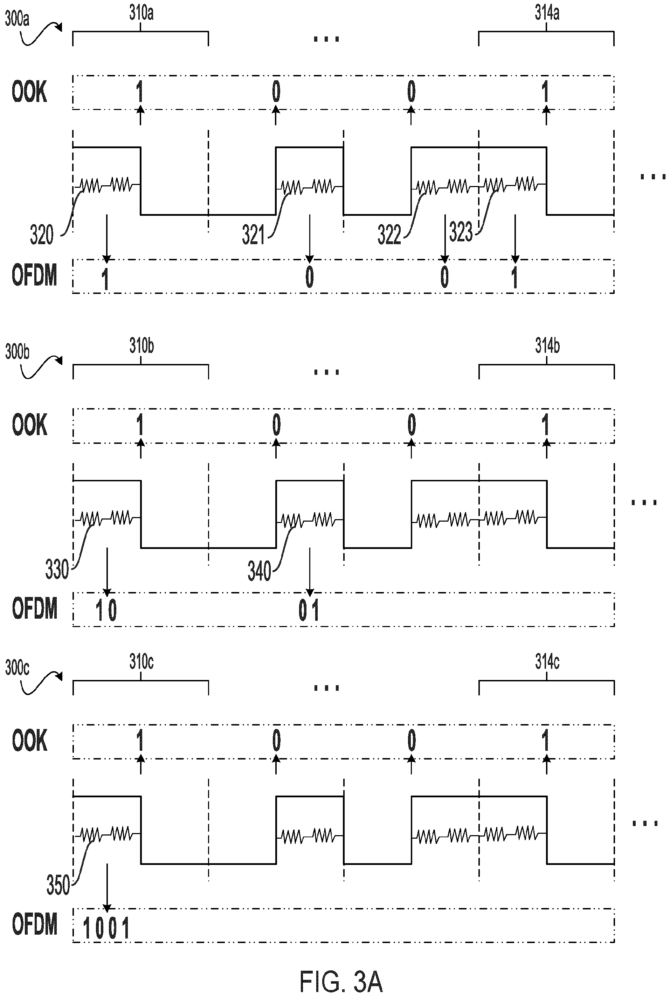

FIG. 3A depicts a phase diagram for a LP-WUS utilizing information redundancy in both an On-Off Keying (OOK) modulation scheme and an overlaid orthogonal frequency division multiplexing (OFDM) sequence. Specifically, FIG. 3A depicts multiple wave forms 300a-300c corresponding to several LP-WUS sequences including both OOK-based information (specifically, OOK-1-based signals) and overlaid OFDM sequences. Each of the wave forms 300a-300c represents a potential way of carrying the information "1 - 0 - 0 - 1" in binary bits, redundantly for example, according to *Option 2* above. Wave form 300a is made up of multiple OFDM symbols 310a-314a arranged in a time domain from left (earlier) to right (later). The wave form 330a is constructed with the understanding that a LP-WUS transmitted to the LP-WUR has 2 OOK symbols (i.e., chips) per Cyclic Prefix-OFDM (CP-OFDM) symbol.

In each OFDM symbol 310a-314a, an OFDM sequence may be sent at some time during the pendency of that symbol. For example, in symbol 310a, an OFDM sequence 320 is sent at the beginning of the symbol and terminates halfway through the symbol (i.e., during the OOK 'ON' duration of the symbol). When two chips per CP-OFDM symbol is used, with Manchester coding, 1 binary bit can be carried within 1 OFDM symbol. At the same time, the pendency of the OFDM sequence during the symbol 310a that is overlaid in the first OOK 'ON' symbol may also redundantly indicate a binary bit of "1" via the overlaid OFDM sequence (i.e., sequence 1 is selected out of 2 sequences) (i.e., due to Manchester coding being applied). In a similar fashion, OFDM sequences 321 - 323 may be decoded by the two chips per CP-OFDM at a LP-WUR as "0", "0" and "1," respectively. Accordingly, the shape of each sequence in corresponding symbols 311a-314a may indicate the same "0", "0," and "1" in the OOK modulation scheme.

In another example, wave form 300b is constructed similarly to wave form 300a, except with a higher number of overlaid OFDM symbols per OOK "ON" symbol. Accordingly, at the first symbol 310b, an OFDM sequence shape indicates a "1" according to the OOK modulation scheme. However, unlike OFDM sequence 320 in OFDM symbol 310a, OFDM sequence 330 may carry the binary data "01" due to an expanded number of overlaid OFDM symbols in the OOK "ON" symbol occurring at symbol 310b. Similarly, the OFDM sequence 340 in OFDM symbol 311b may carry the binary data "01," while forming the OOK shape of a binary "0." Thus, while only two bits have been transmitted per the OOK-1 modulation scheme by the beginning of OFDM symbol 313b, the entire binary sequence "1 - 0 - 0 - 1" has been sent via the overlaid OFDM sequences. The wave form 300b may then be completed by sending some OFDM sequence data (e.g., noise) in OFDM symbols 313b and 314b to indicate, via OOK, the final bits of "0" and "1." This is one manner in which a wave form, such as wave form 300b, may allow for OFDM-sensing-capable UEs to decode a LP-WUS quickly, while still allowing legacy OOK-sensing-capable UEs to decode the LP-WUS.

Accordingly, wave form 300c in constructed with an even higher number of overlaid OFDM symbols per OOK "ON" symbol. In this manner, the entire binary signal "1 - 0 - 0 - 1" can be carried by an OFDM sequence 350 in OFDM symbol 310c, allowing even faster decoding by an OFDM-sensing-capable UE. The remaining OFDM symbols 311c-314c may include some data in each symbol to indicate the same binary sequence for legacy OOK-sensing-capable UE. It will be appreciated that OFDM-sensing-capable UEs may also decode the binary sequence via the OOK modulation scheme for redundancy reasons to ensure that a previous OFDM sequence was corrected decoded by the LP-WUR.

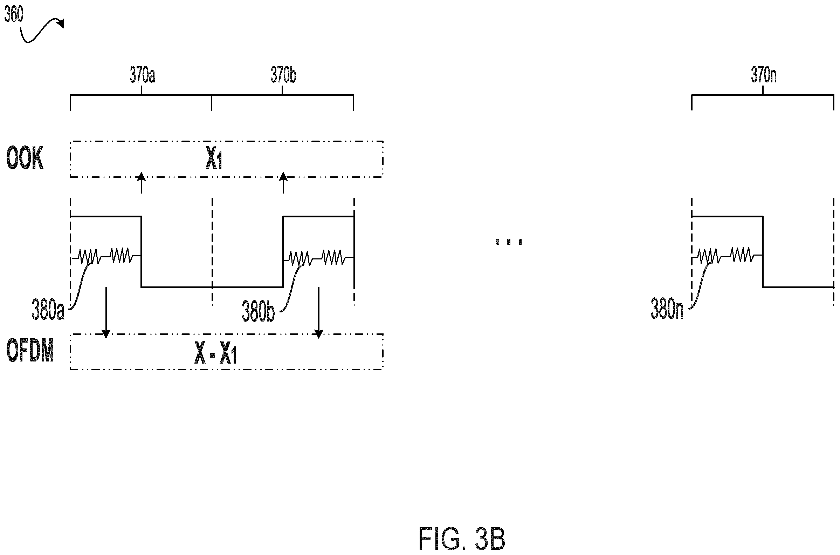

FIG. 3B depicts a phase diagram for a LP-WUS of increase payload size by utilizing both an OOK modulation scheme and an OFDM sequence. Specifically, FIG. 3B depicts phase diagram 360 of a set of OFDM sequences 370a - 370n across several CP-OFDM symbols 380a-380n. The wave form 360 depicted in FIG. 3B may correspond to one or more embodiments utilizing *Option 1* described above. For example, wave form 360 may carry some payload information "X" partially in both an OOK-based sequence and an OFDM-based sequence. As depicted in FIG. 3B, the binary waveforms created by the OFDM sequences 380a-380d in CP-OFDM symbols 370a-370b form information according to the OOK modulation scheme collectively denoted "X1." Because the OFDM sequences need not express the same binary information as the binary waves they form (as shown in FIG. 3A with respect to wave forms 300b and 300c), the collective OFDM sequences 380a-380d in CP-OFDM symbols 370a-370b may form separate information denoted "X-X1." Accordingly, an OFDM OFDM-sensing-capable LP-WUR may attain the full payload "X" using the combination of the OOK-based information "X1" and the OFDM sequence-based information "X-X1." Subsequent symbols up to CP-OFDM symbol 370n may carry additional information for the LP-WUR in subsequent OFDM sequences up to 380n, which completes the wave form depicted in phase diagram 360.

Using these schemes, LP-WUS architectures will allow the main radio to enter a deep sleep mode based on the presence of an LP-WUR monitoring for the WUS. This signal will include one or more OOK signal with an overlaid OFDM sequence. Some UEs with lower capabilities may be able to decode only the OOK signaling, while others may decode both the OOK and the overlaid OFDM sequences. However, all UEs should be able to decode an LP-WUS to ensure proliferation of the low power wake up paradigm. Therefore, there is a need in the art for a standardized LP-WUS signal paradigms that may be appropriate for UEs of any capability.

### HYBRID OPERATION FOR DATA-CARRYING OVER OFDM SEQUENCES

In addition to the physical arrangement of LP-WUS hardware, the signal composition and format is important to ensure system efficiency. Thus, there is a need for comprehensive information structures for OFDM sequence transmissions in OOK symbols. For example, using a larger number of OFDM sequences per transmission will increase detection complexity due to the large number of correlations needed for sequence detection. Conversely, using a lower number of sequences will limit the overlaid OFDM sequences payload and reduce the amount of information that may be transmitted with a LP-WUS, potentially adding procedural latency. To address these drawback, multiple novel approaches may be applied to LP-WUS transmissions.

In various embodiments, consecutive symbols (e.g., OOK symbols) or spaced symbols may be utilized to convey a larger amount of information per LP-WUS broadcast. The spacing of information carried in OOK symbols may be dependent on the desired properties of a LP-WUS or the configuration of an intended UE. In various embodiments, information is carried in consecutive OOK symbols to reduce latency and improve signal efficiency. For example, a LP-WUS transmission may be configured to carry the overlaid OFDM sequences in two or more consecutive OOK symbols. This is useful for more highly-complex LP-WUR devices, which may have the ability to process the received overlaid OFDM sequences in sequential symbols.

In various other embodiments, information is carried instead in two or more non-consecutive OOK symbols to increase reliable signal processing. For example, a LP-WUS transmission may be configured to carry the overlaid OFDM sequences in every other OOK symbol in the time domain. This is useful for less-complex LP-WUR devices, such as those which can receive and process OFDM sequences, but not fast enough to efficiently do so in every consecutive symbol. In various further embodiments, a base station may be configured with a baseline gap, "G" which denotes the number of OOK symbols that each overlaid OFDM sequence should be away from the next overlaid OFDM sequence. This gap value can be a default value at a gNB or sent to the gNB by a LP-WUR based on a (pre)-defined or (pre)-configured value known to the UE.

In various embodiments, a gNB may be configured to modify the gap value G for subsequent OFDM sequences based on some feedback from a LP-WUR. For example, a gNB may, by default, send the overlaid OFDM sequences in consecutive OOK symbols with no gap (G = 0). This may be useful to interact with higher-complexity LP-WUR with low latency, while providing a baseline configuration for less complex LP-WUR. A LP-WUR may subsequently send an updated configuration back to the gNB indicating a suggested new non-zero gap value based on the LP-WUS ability to process OFDM sequences. The gNB may then responsively update G to send OFDM sequences in non-consecutive OOK symbols to the LP-WUR according to the new configuration. In some embodiments, gaps may be staggered in non-uniform gaps, for example, sending the OFDM sequences with a one symbol gap, followed by a two symbols gap, and repeating.

In various embodiments, the first OOK symbol of a transmission carries an indication of the sequences used in subsequent OOK symbols (i.e., reduces the search space for the remaining symbols). In various further embodiment, this is done by indicating one of a set of pre-configured sequence sizes.

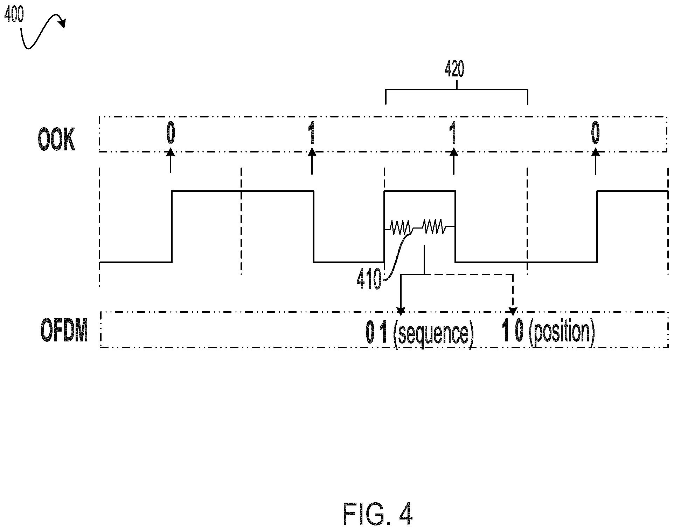

In various embodiments, signal information is encoded in an OOK symbol location that is used to carry the overlaid OFDM sequence, rather than the OFDM sequence itself. In this case, the payload may be obtained by identifying the OOK symbol that carries the overlaid sequence. One advantage of this arrangement is that only one correlation is needed with one sequence. FIG. 4 depicts a phase diagram for a LP-WUS incorporating an overlaid OFDM sequence. Specifically, FIG. 4 depicts a phase diagram 400 showing an overlaid OFDM sequence illustration including one correlation in one sequence. For example, the OFDM sequence 410 occurs at the 3^{rd} OFDM symbol 420 in the wave form. Including the OFDM signal in the 3^{rd} OFDM symbol, only, may accord with a corresponding portion of the larger payload. For example, as depicted in FIG. 4, the sending of the OFDM sequence in the 3^{rd} symbol may be representative of binary data "1 - 0." In various embodiments, the location of the OFDM sequence in a symbol may point to an encoded portion of the payload in the overlaid OFDM sequence. Thus, the symbol position may be used in combination with other techniques described herein to convey information.

In various embodiments, the payload of a LP-WUS may be sent entirely using one modulation scheme. In some embodiments, the systems and process described herein may be performed using only an OOK modulation scheme. In some embodiments, the systems and processes described herein may be performed using only overlaid OFDM sequences.

In various embodiments, a gNB may be configured to perform LP-WUS signaling operations using one or more techniques described herein, including those detailed above. For example, a gNB may configure a LP-WUS to carry a payload using both OFDM sequences and sequence symbol locations. In another example, involving FIG. 4, a gNB sending wave form 400 may signal a LP-WUR to obtain a payload by combining the symbol 420 location of an OFDM sequence, with the contents of the OFDM sequence itself. For example, as shown in FIG. 4, the actual overlaid OFDM sequence 410 may carry data "01." Combining the carried data of the overlaid OFDM sequence 410 and the positional data inherent to sending the overlaid OFDM sequence at symbol 420. the payload can be decoded and combined to "1 - 0 - 0 - 1," similar to the corresponding OOK data.

In various embodiments, the gNB may determine the constructions scheme for a LP-WUS and signal a LP-WUR of the scheme so that it may efficiently decode a subsequent LP-WUS. The signal including the intended scheme to the LP-WUR may arrive, for example, in a transmission just prior to the sending of the LP-WUS. In some embodiments, the gNB can be (pre)-configured with a LP-WUS constructions scheme that will be sent to a LP-WUR until that particular LP-WUR reports information indicating a better scheme for a future signal.

The number of overlaid OFDM sequences per OOK symbol in a transmission is also an important point to consider for efficiency LP-WUS operation. In various embodiments, the number of OFDM sequences per OOK symbol may be (pre)-configured by a radio resource control (RRC) configuration per bandwidth part (BWP). In various other embodiments, the number may be indicated to all UEs, or a group of UEs, by downlink control information (DCI) or by a medium access control (MAC)-control element (CE) that is received by the main radio (e.g., PDCCH or a physical downlink shared channel (PDSCH)). In various embodiments, the main radio of a UE receives this information prior to entering a sleep mode. For example, the main radio may receive and then communicate with the LP-WUR during regular operations prior to entering sleep mode in order to identify the expected number of OFDM sequences per OOK that may occur in a LP-WUS.

In various embodiments, the number of OFDM sequences per OOK may be pre-configured by the gNB before sending to a UE or group of UEs. In various other embodiments, the number is dependent on a particular UE capability or multiple capability of multiple UEs, and accordingly indicated to each UE, or a subset of the UEs, based on previously-exchanged information. In these embodiments, for example, a gNB may utilize a technique such as RRC signaling to indicate the number of overlaid OFDM sequences to the targeted UE devices. In some embodiments, this indication may also be carried through DCI signaling or by a MAC-CE to the targeted devices. The number of overlaid OFDM sequences may be detected by the main radio and then accordingly passed to the LP-WUR.

In various alternative embodiments, instead of indicating a number of overlaid sequences (and possibly their type), the gNB may instead, or additionally, indicate an index to the UE in order to select one value from a set of (pre)-configured values for the number of overlaid sequences and/or their type. For example, an index value may correspond to a table of overlaid sequences and/or their type stored at a UE, and the index value may correspond to one or more of the table values that the UE may identify as an expected signal configuration for an incoming communication. In various embodiments, the type of overlaid sequence is a Zadoff-Chu (ZC) sequence, or a similar format of sequence. For example, for an overlaid OFDM sequence utilized in LP-WUS designs, such as OOK-4 where M (the number of chips per CP-OFDM) >1, ZC sequences may be supported such that when applied to an OOK symbol, a new signal may be derived of constant amplitude thus allowing an easily detectable OOK level 1 and OOK level 0.

In various embodiments, the number of overlaid OFDM sequences may be conveyed by OOK signaling directly to the targeted LP-WUR. For example, the LP-WUR may enter a state of monitoring until it receives a LP-WUS. It will then attempt to decode the first LP-WUS it receives until it correctly receives an index from a set of pre-configured values or a specific number for the number of overlaid sequences. A (pre)-configured default value may also be considered by the LP-WUR on the type of overlaid OFDM sequences and their number, until it receives an updated value from the gNB. In such embodiments, the LP-WUR may still decode the overlaid OFDM sequences until updated information is available on the overlaid OFDM sequences. In some further embodiments, the value may also be limited to improve the reliability of the transmission.

In various embodiments, the LP-WUS sequence set size may be dynamically adjusted based on a UE capability reported, for example to the gNB, or another UE in a group. For example, the gNB may adjust the sequence set size of an LP-WUS based on a reported capability of one or more intended UEs for communication. In various embodiments, the report may come directly from the intended UE(s), another UE from which the intended UEs' capability was shared, or a memory of the gNB.

In various embodiments, the number of overlaid OFDM sequences per OOK symbol may be either UE-specific, group-specific or BWP specific. In cases of UE specific sequences, the number of overlaid OFDM sequences per OOK symbol is derived based on a reported capability of a single UE, such as a UE intended for a LP-WUS

In cases of group-specific sequences, a grouping of UEs, wherein one or more of the UEs is an intended UE for the LP-WUS, is associated with a particular number of OFDM sequences per OOK symbol.

In cases of BWP-specific sequences, the number may be based on a contiguous set of physical resource blocks (RB) and time slots in a resource domain. In various embodiments, the number of overlaid OFDM sequences per OOK symbol may be (pre)-configured per BWP (e.g., by using RRC configuration). For example, the gNB may determine the number of overlaid OFDM sequences per OOK symbol for LP-WUS according to network configurations derived from RRC signaling transmitted in the Packet Data Convergence Protocol (PDCP).

In various embodiments, the number of overlaid OFDM sequences per OOK symbol may be dependent on an exchanged UE capability. For example, during an initial communication between a gNB and a UE, the UE may indicate a capability for LP-WUS recognition and parsing. In one example, a UE may communicate with a gNB that it is capable of recognizing both OOK and overlaid OFDM sequences. In such cases, the gNB may responsively determine to send LP-WUS partially in the OOK signal and partially in the overlaid OFDM sequence to increase information payload. In another example, the gNB may recognize during an initial interaction with a UE that the UE sends signals in a format indicative of reduced capability. In such cases, the gNB may responsively determine to send the LP-WUS wholly in the OOK signal and repeating in the overlaid OFDM sequence to increase signal reliability if the UE is able to detect the overlaid OFDM sequences (i.e., the same information is redundantly sent in the Ook and the overlaid OFDM sequences).

In various embodiments, the number of overlaid OFDM sequences per OOK symbol may be indicated by the gNB through RRC signaling, DCI signaling or a MAC CE that are received by the main radio. For example, the gNB may send, to the UE at some point following an initial connection, a transmission including information in an RRC, DCI, or MAC CE composition that indicates the number of overlaid OFDM sequences per OOK symbol in a future LP-WUS transmission. It will be appreciated that other transmission formats or compositions may carry the LP-WUS information to the UE.

In various embodiments, the number of overlaid OFDM sequences per OOK symbol may be indicated by the gNB through OOK signaling directly to the LP-WUR. For example, prior to sending a LP-WUS to a UE, a gNB may directly communication with, via an OOK signal, a LP-WUR at the UE to indicate the number of overlaid OFDM sequences per OOK symbol. Due to the LP-WUR always being on, the UE may receive the OOK signal while the main radio is on or off. In some embodiments, the gNB send the OOK signal indicating the number of overlaid OFDM sequences per OOK symbol directly before sending a LP-WUS to the LP-WUR. In other embodiments, the gNB sends the number as part of the LP-WUS, for example as a preamble to the regular LP-WUS.

In various embodiments, a default pre-configured value may be used by the LP-WUR for the number/type of overlaid OFDM sequences until additional information to the contrary is received. In some examples, gNB is configured to use a default number of OFDM sequences for UE devices with unknown decoding capabilities. This pre-configured number will be used in LP-WUS until a better alternative is proposed, for example, by the intended UE based on LP-WUS decoding capability, or a group of UEs with a designated number to be used for one or more UEs in the group. In some embodiments, a UE may send an initial number to the gNB for it to use until further notice. The UE may update this number, for example, after forming or being instructed by the gNB to form a group with other UEs, some of which may have reduced decoding capability.

As discussed above, when overlaid OFDM sequences are utilized to carry a portion of the LP-WUS, one important aspect to consider is how to utilize the additional payload that may be carried by the separate overlaid OFDM sequences used in that paradigm. For example, in *Option 1,* additional information is transmitted in the overlaid OFDM sequences, and is not carried redundantly in the OOK signal. While this increases the overall payload of the instantaneous LP-WUS, the lack of redundancy makes this a higher-risk, higher-reward option.

Conversely, in *Option 2* described above, the LP-WUS information carried by the OOK symbols are repeated in the overlaid OFDM sequences at, for example, the first OOK symbol (or in some cases the *Y-first* OOK symbols *[e.g., the first "Y" OOK symbols carrying the overlaid OFDM sequences]* in case of larger payload, or a limited number of sequences sent) to improve reliability and reduce detection latency. Accordingly, the redundancy of *Option 2* increases the changes of proper signal acquisition at the cost of a potentially higher latency due to the decreased amount of information that is carried by an OFDM sequence.

In various embodiments, a hybrid approach may be considered which incorporates the advantages of both *Option 1* and *Option 2* above. For example, the first overlaid OFDM sequence (or the *Y-first* OOK symbols, in case of larger payload or limited number of sequences) may be used to carry a copy of the payload sent over the OOK symbols to improve signal reliability. In the same transmission, the remaining OOK symbols not yet utilized may be transmitted and overlaid with additional information that may be utilized by the LP-WUS receiver. In one example embodiment, the remaining overlaid OFDM sequences within the OOK symbols may be used to carry additional information.
- UE sub-group/Group identifier ID(s) (multiple additional repetitions may be utilized to improve reliability)
- Additional UE ID(s)
- Additional information for faster access (reduce the latency by providing an earlier PO index that may be monitored by the UE for faster access
- Other additional information (e.g., a random-access channel (RACH) occasion to be used by the UE and/or a dedicated RACH preamble may be indicated to the UE to allow for contention free access, thus reducing the chances of collisions between neighboring UEs)
- The overlaid OFDM sequence pool size used in subsequent OOK symbols

In various embodiments where Additional UE ID(s) are used in the remaining overlaid OFDM sequences within the OOK symbols, the information may be used to decrease the chances of a false wake-up rate and also save power. One example of utilizing UE ID information is by including information in the overlaid OFDM sequences corresponding to IDs specifying the UE(s) within a particular group that is designated to wake-up in response to the transmitted LP-WUS (i.e., sub-group ID). In many cases, a UE will have two identifiers (i.e., a group ID and a UE ID). A UE may first monitor for group ID over OOK signaling, and if that ID is detected, the UE may begin monitoring of the overlaid OFDM sequences to detect the subsequent UE ID. In this example, since the UE ID is known, the UE need only perform one correlation since it is precisely looking for a sequence associated with its own particular ID. In various further embodiments, this association may be (pre)-configured through RRC signaling and sent over the main radio. In other embodiments, a UE may also be configured to monitor multiple IDs (e.g., UE ID and/or a multi-cast ID).

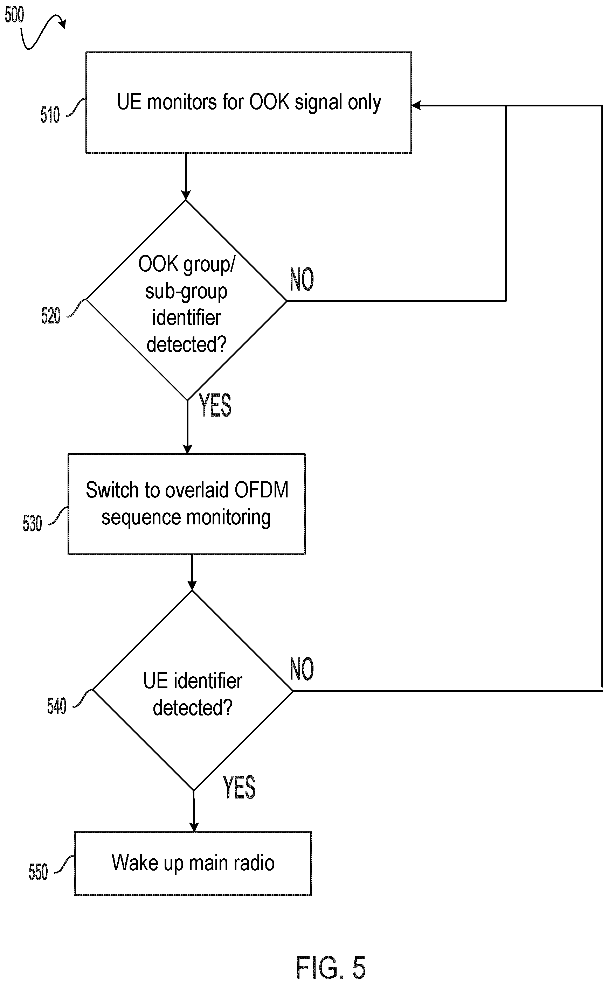

FIG. 5 is a flowchart illustrating an example method for performing radio wake up based on a group ID and UE ID in a LP-WUS. Specifically, process 500 depicted in FIG. 5 begins at step 510 where a UE monitors for an OOK signal only. At decision block 520, the UE makes a determination as to whether an OOK group or sub-group identifier is detected by the UE. If not, the UE returns to step 510 and continues monitoring OOK only. If the UE does detect an OOK group or sub-group identifier it moves to step 530, where the UE switches to overlaid OFDM sequence monitoring. Based on the monitoring, at decision block 540, the UE makes a determination as to whether a UE identifier is detected, for example, a UE identifier corresponding to the UE. If not, the UE will switch back to OOK monitoring only in step 510. If the UE does detect a UE identifier, the UE may proceed to step 560, wherein the UE utilizes the LP-WUR to wake up the main radio for performing wireless communication operations.

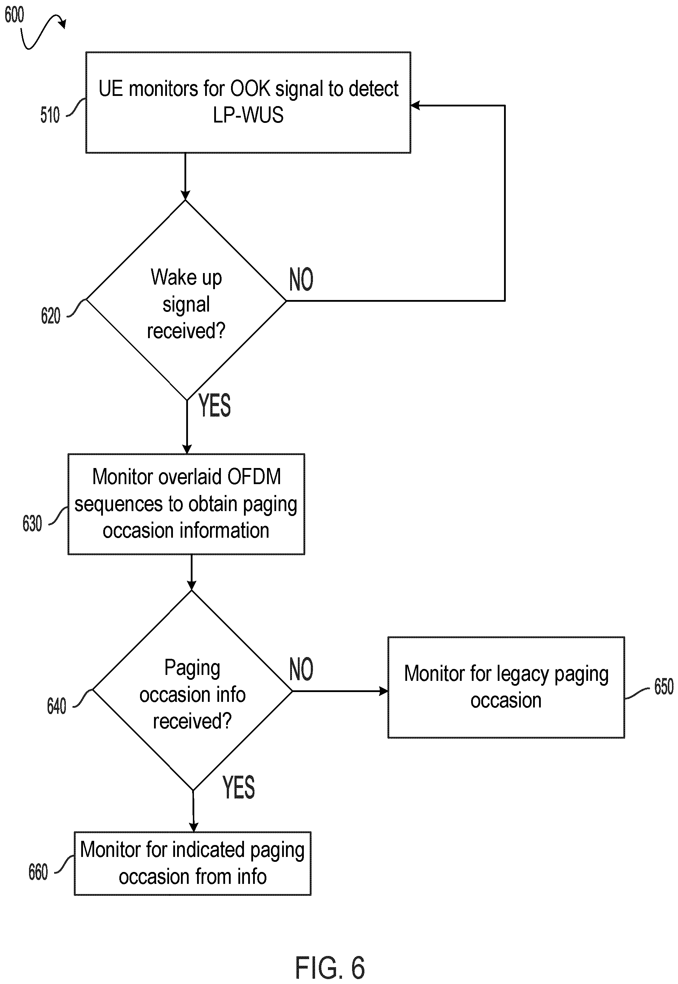

In various embodiments where Additional Information for Faster Access are used in the remaining overlaid OFDM sequences within the OOK symbols, the information may provide an earlier PO index that may be monitored by the UE for faster communication. FIG. 6 is a flowchart illustrating an example method for monitored paging occasion (PO) selection based on information received from overlaid OFDM sequences. Specifically, FIG. 6 depicts process 600 wherein a UE may monitor PO(s) or legacy PO(s) based on additional information in the overlaid OFDM sequence. Process 600 begins at step 610 where the UE monitors for OOK signals to detect a wake-up signal. If a wake-up signal is not received, at decision block 610, the UE will continue to monitor in step 610. If a wake-up signal is received, the UE may proceed to step 630 wherein the UE will monitor overlaid OFDM sequences to obtain additional information relating to a PO. At decision block 640 the UE will determine if any additional PO information was received with the overlaid OFDM sequence. If not, it may be assumed that legacy PO instances are being utilized, and the UE may begin monitoring for a legacy PO at step 650. If additional PO information was received, the UE may process to step 660, wherein it will monitor for a specific PO described in the additional PO information, that may be earlier than the legacy PO. The process 600 will thus improve UE communications by signaling the UE to expect a PO when the LP-WUS is sent to wake the main radio.

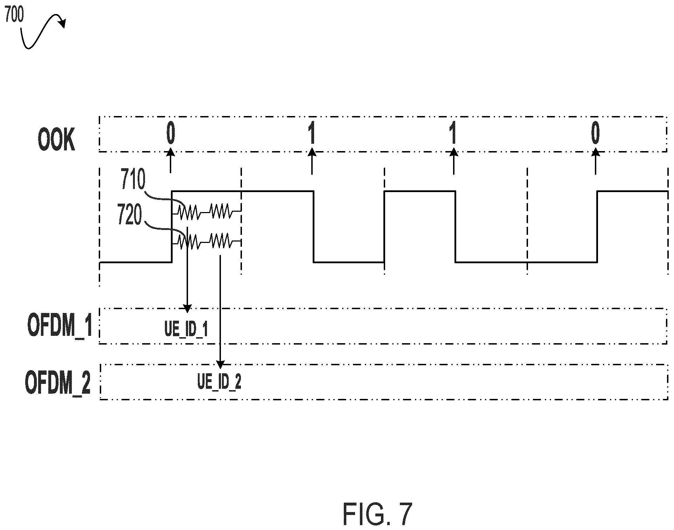

In various embodiments, to further increase the payload sent to the UE and reduce the latency, one or more overlaid OFDM sequences may be sent in each OOK symbol. This approach is similar to that used in sidelink feedback channels, in which multiple ZC sequences may be sent per RB to increase the size of the feedback payload. FIG. 7 depicts a phase diagram for a LP-WUS incorporating an overlaid OFDM sequence. Specifically, FIG. 7 depicts a phase diagram 700 of two distinct overlaid OFDM sequences 710 and 720 occurring in a single OOK symbol. As depicted in FIG. 7, both overlaid OFDM sequences 710 and 720 occur in the same OOK symbol and may correspond to two distinct UE IDs. For example, two overlaid OFDM sequences may each carry information corresponding to a distinct UE ID. When each of two distinct LP-WURs detects a sequence corresponding to its UE ID in either of the two OFDM sequence, each device may wake up. This will allow for waking more than one UE device at ma time by using a single OOK symbol.

In various embodiments, the payload contents of the overlaid OFDM sequences may include one or more of the following:
- Additional user ID(s):
- PO index to be monitored by the UE
- Random access occasion index
- Dedicated PRACH preamble

In various embodiments, multiple overlaid OFDM sequences may be transmitted per OOK symbol. This will allow the gNB to increase the LP-WUS payload and reduce the time the UE must be awake. For example, in addition to a first overlaid OFDM sequence per OOK symbol, a second overlaid OFDM sequence may be transmitted per OOK symbol. This second sequence may include information that is redundant to information in the OOK signal, carries a separate payload, or some combination of both. It will be appreciated that there is no limit on the number of OFDM sequences that may be transmitted per OOK symbol. In various embodiments, a first overlaid OFDM sequence is transmitted per OOK symbol that carries a redundant payload to increase signal decoding reliability. Concurrently, a second overlaid OFDM sequence is transmitted per OOK symbol carrying additional data that will increase the overall payload of the LP-WUS. In this manner, multiple OFDM sequences may be transmitted per OOK symbol to concurrently improve latency and reliability in a hybrid approach. In various embodiments, two or more LP-WURs may be triggered simultaneously by sending their assigned overlaid OFDM sequences simultaneously on the same OOK symbol.

Due to the LP-WUR performing multiple correlations in order to detect the information transmitted with overlaid OFDM sequences, higher power consumption may occur at the UE device. This may be due to detecting the magnitude and phase of the received signal, which may be more demanding from the perspective of the end-device, and even the gNB itself. To address this, in various embodiments the UE is permitted to reduce the number of instances it would be required to perform OFDM sequence monitoring. In various embodiments, monitoring windows within LP-WUS signals may be defined during which the UE will be required to perform the overlaid OFDM sequence detection. These windows may be (pre)-configured independently from the LP-WUS monitoring occasions, and/or they may be a subset of the LP-WUS monitoring occasions (e.g., a UE might be required to monitor the overlaid OFDM sequences for only the first half of the LP-WUS monitoring occasions). The use of monitoring windows will reduce the power-consumption for monitoring at the end-device, effectively cutting power consumption at the device while allowing to reliable signal reception. In some embodiments, rules for triggering the monitoring period are set for the UE and gNB to send and receive information over certain time periods. In some examples, a two-step triggering approach may be as follows:
- Each UE is associated multiple UEs IDs (e.g., 2), a group/sub-group ID, and an individual UE ID;
- The group ID is transmitted over OOK symbols, and the individual UE ID is transmitted through overlaid OFDM sequences;
- By default, the UE only monitors OOK until its group/sub-group ID is detected.

Regarding the UE only monitoring OOK until its group-sub-group ID is detect may be further subject to the following sub-options:
∘ If the individual UE ID is indicated on the overlaid OFDM sequence, the UE wakes up its main radio, otherwise it reverts back to monitoring of LP-WUS.
∘ If the UE detects its group/sub-group ID on the OOK symbols, it may begin monitoring the overlaid OFDM sequences subject to processing time requirements to detect the individual UE ID (i.e., after a time separation sufficient for receiving/processing the group/sub-group ID and the activation of the circuity needed for overlaid sequence detection). The monitoring of the overlaid OFDM sequences may be activated for a pre-defined or a (pre)-configured duration before switching back to OOK only monitoring. Alternatively, it may be activated until at least one individual UE ID is received.

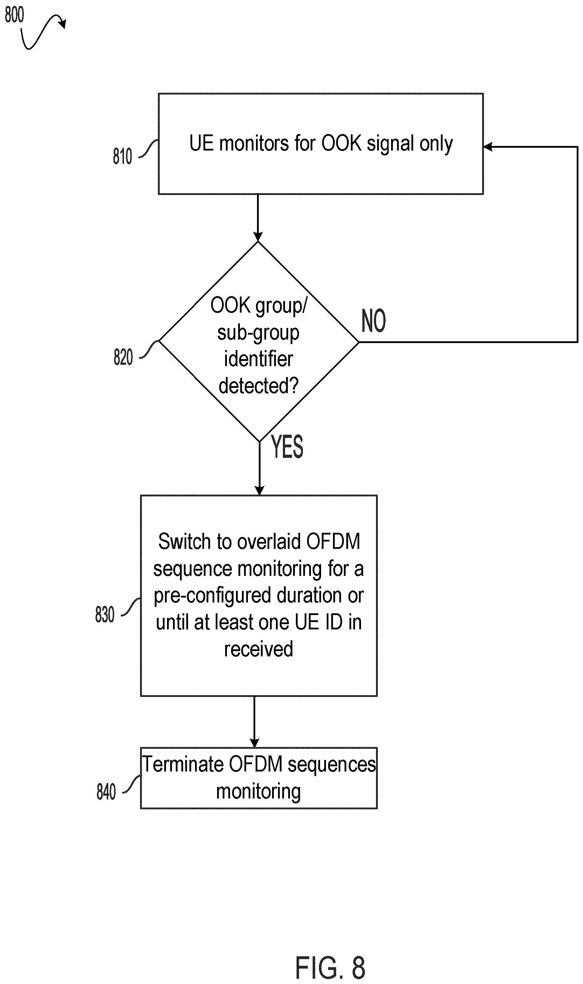

FIG. 8 is a flowchart illustrating an example method for monitoring OFDM sequences for a pre-configured duration based on OOK symbols. Specifically, FIG. 8 depicts a process 800 for switching to overlaid OFDM sequence monitoring for a fixed duration until at least one UE ID is received. Process 800 begins at step 810, where the UE monitors for OOK only, similar to step 510 of process 500. At decision block 510, the UE determines if an OOK group/sub-group identifier is detected. Similarly, to decision 520 of process 500, if no OOK group identifier is detected, the UE returns to monitoring OOK only at step 810. If the UE determines that an OOK group/sub-group identifier is detected, the UE moves to step 830, wherein the UE will switch to monitoring for an overlaid OFDM sequence. However, the monitoring by the UE for the overlaid OFDM sequence will only continue for a pre-configured duration or until at least one UE ID is received in the overlaid OFDM, at which point the UE will terminate monitoring of the OFDM sequence at step 840.

The approaches described above assist in reducing the power consumption of the device by allowing the LP-WUR to remain in ultra-low power over longer periods of time when it does not need to monitor for the transmitted OFDM overlaid sequence. In addition, this approach also avoids false activation of the main radio by allowing the gNB to specify the UE within a group/sub-group that needs to be activated, thus preventing cross-confusion between devices.

In various embodiments, the latency incurred due to the detection of the additional UE ID in the overlaid OFDM sequence is reduced by, sending the overlaid OFDM sequence on the OOK symbol directly after the corresponding OOK symbols that indicated the group/sub-group ID subject to processing time requirements (i.e., separation is included to allow for processing by the LP-WUR). In some embodiments, the overlaid OFDM sequence carrying the individual UE ID does not necessarily apply to the group/sub-group ID that is used to trigger the overlaid OFDM sequence monitoring. For instance, multiple individual UE IDs may be carried by one or more overlaid OFDM sequences to reduce the signaling overhead (e.g., by sending multiple overlaid OFDM sequences per OOK symbol).

In various embodiments, a monitoring window may be defined for detection of overlaid OFDM sequences to reduce the power consumption. The duration of the window may be (pre)-configured to each separately or per BWP. For example, a (pre)-configured monitoring window may indicate a period of time during which a gNB may determine not to send overlaid OFDM sequences due to the likelihood of non-monitoring by the UE during that time period to save power. In other embodiments, the gNB takes note of current BWP conditions to determine the window during which it may not send overlaid OFDM sequences.

In various embodiments, the monitoring of OFDM sequences may be based on an explicit trigger from the gNB such as the detection of the group/sub-group ID of a UE or group of UEs. In various embodiments, the overlaid OFDM sequences may also be used as preambles/postambles to identify the beginning/end of the payload being sent with the LP-WUS on the OOK symbols. In some embodiments, a pre-defined overlaid OFDM sequence may be carried by the first/last bit of the LP-WUS payload. Subsequently, the LP-WUR may then perform correlations and accordingly identify the first/last bit of the LP-WUS payload.

In various embodiments, a pre-defined overlaid OFDM sequence may be carried by the first/last bit of the LP-WUS payload to act as a preamble/postamble to identify the beginning/end of the payload. For example, a UE monitoring for a LP-WUS may parse the overlaid OFDM sequence with instructions to determine the preamble of the LP-WUS from the first bit, parse then intermediate information, and finally parse the last bit to determine the postamble to recognize that the LP-WUS has no further information to determine.

### LP-SS synchronization performance improvement by using overlaid OFDM sequences

In various cases, overlaid OFDM sequence signaling may be improved with different forms of synchronization between the gNB and UE, with respect to LP-WUS sending and decoding. To synchronize an LP-WUR with an intended LP-WUS from the gNB, a Low Power Synchronization Signal (LP-SS) may be utilized. Like a synchronization signal block (SSB) in 5G operations, the LP-SS may carry at least a binary sequence that is used for synchronization, similar to those that are carried in primary synchronization signals (PSS)/secondary synchronization signals (SSS). This binary sequence may be sent through OOK signaling. Via this structure, the LP-SS signal may carry overlaid OFDM sequences, which may further improve the performance in various ways. In various examples, the overlaid OFDM sequences may be used to achieve one or more beneficial operations, described below.

*Alternatives to the binary sequence:* In various other embodiments, instead of utilizing a binary sequence for synchronization, the advanced wake-up receivers may rely only on the overlaid OFDM sequences for synchronization. Accordingly, they may obtain synchronization much faster than the other devices. In this case, the LP-SS may contain multiple overlaid sequences in adjacent OOK symbols that may be used by the LP-WUR for achieving synchronization. For instance, sequences {*z1, z2, z3*} may be carried on OOK symbols *1, 2,* and *3,* respectively, and may be used for synchronization along with fine tuning (e.g., by calculating the difference between the two correlation peaks).

*Carry additional information:* The overlaid OFDM sequences may be used to convey additional information to the LP-WUR without increasing the latency. In other words, the overlaid OFDM sequences may be used to carry information similar to that carried by the Physical Broadcast Channel (PBCH) in an air interface (Uu) link. Examples of such information may include one or more of the following:
- Time/frequency window information for the LP-WUS monitoring occasion(s) and their corresponding LP-WUS occasions;
- The periodicity of the LP-WUS monitoring occasions;
- Dynamic paging occasion information (e.g., the time separation between the LP-WUS and the monitoring occasion);
- DRX related information.

*Frequency synchronization - Low-end envelope detection LP-WUR:* An envelope detection applied over the binary sequence does not detect the phase, and thus can't be used for frequency synchronization. However, envelope detection receiver with parallel branches in frequency domain may be used to enable frequency synchronization. Such a receiver structure will also demodulate single segment OOK signals. In various embodiments, an LP-WUR configured with parallel branches enabled may compare the power difference between different frequency locations and use it for frequency error estimation. Thus, the LP-WUR may have, for example, two envelope detection branches tuned in frequency near the nominal LP-WUS/LP-SS center frequency. The frequency accuracy requirements of both gNB and UE will determine how close the branches' center frequencies are tuned compared to the nominal center frequency. Based on the actual values of the differences between the transmit center frequency and the two branches, the energy received by each branch may be imbalanced. Using this, the LP-WUR may estimate the frequency error based on the energy difference of the two branches.

*Frequency synchronization - High-end LP-WUR with overlaid OFDM sequence detection capability:* High-end LP-WUR architectures (e.g., devices with a higher power capacity and/or more complex receives) that are capable of OFDM detection may utilize one or more possible operations due to their configuration as high-end devices. In various first embodiments, the LP-SS or LP-WUS overlaid OFDM sequence carries a sequence, (e.g., a ZC sequence), that is known to LP-WUR receiver. This information is either pre-defined or carried through RRC signaling or a MAC CE to allow for estimation of frequency error. Different overlaid ZC sequences that are all known to LP-WUR are modulated on top of the "ON" state of OOK symbols, thus ensuring a received LP-WUS may be decoded. In some embodiments, a ZC sequence that is known to LP-WUR may be modulated on top of the "ON" state of OOK symbols. Since both options ensure that the overlaid OFDM sequence is known to LP-WUR receiver, then LP-WUR may estimate the frequency error based on such known information.

*Time synchronization enhancement:* In various embodiments, overlaid OFDM sequences may be used to identify the beginning of the binary sequence and thus assist in time acquisition. The overlaid OFDM may thus act as a preamble to identify the beginning of the sequence. For example, a pre-defined overlaid OFDM sequence may be carried on the first bit of the binary sequence. Subsequently, once this sequence is detected, the device may then identify the first bit of the binary sequence and accordingly perform synchronization. In addition, another pre-defined sequence may be sent in the last bit of the binary sequence, in order to act as a postamble to identify the end of the binary sequence. This may also help in improving synchronization performance.

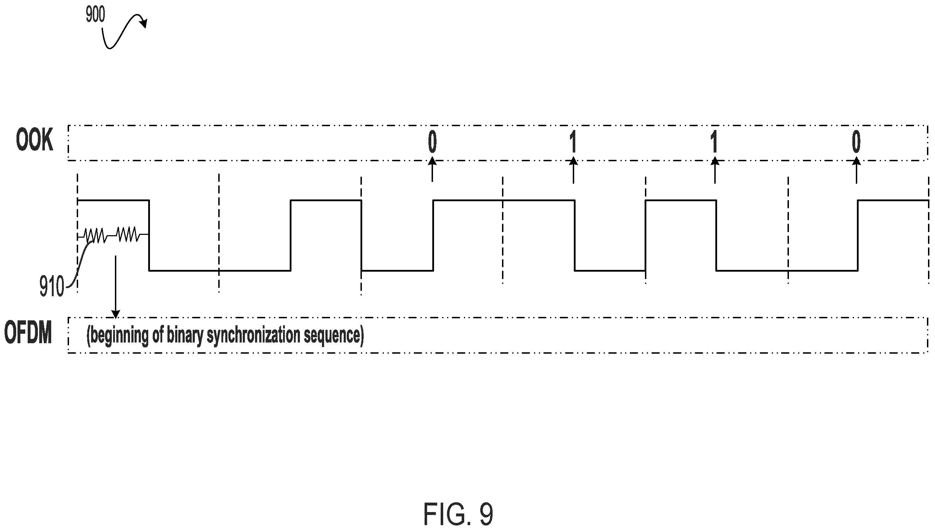

FIG. 9 depicts a phase diagram for a LP-WUS incorporating an overlaid OFDM sequence. Specifically, FIG. 9 depicts a phase diagram 900 illustrating how an overlaid OFDM sequence may act as a preamble to identify the beginning of a binary synchronization sequence. As shown in FIG. 9, the overlaid OFDM sequence occurring at OOK symbol 910 occurs at the first symbol of the signal and thus may carry information that may be used to identify the beginning of the binary sequence to improve UE processing of the subsequent OFDM sequences in the LP-WUS. The OFDM sequence occurring in symbol 910 may thus act as a "preamble" to inform the UE of expected subsequent information, and/or cause a switch back to OOK monitoring to obtain further information, such as a binary synchronization sequence It will be appreciated that an overlaid OFDM sequence may be place near the end of the LP-WUS as well as a "postamble" to indicate the end of the LP-WUS and the cause the UE to terminate monitoring of LP-SS.

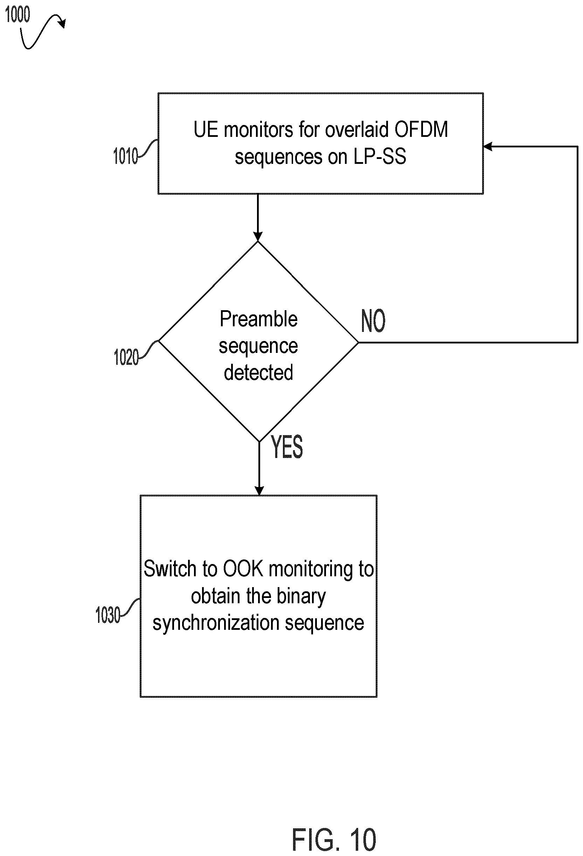

FIG. 10 is a flowchart illustrating an example method for monitoring OFDM sequences for a pre-configured duration based on OOK symbols. Specifically, FIG. 10 depicts process 1000 wherein a UE may utilize a preamble sequence to switch back to OOK monitoring for LP-SS operations. Process 1000 begins at step 1010, wherein the UE monitors overlaid OFDM sequences on LP-SS. At decision block 1020, the UE determines whether a preamble sequence is detected during OFDM monitoring. If not, the UE returns to OFDM monitoring in step 1010. If a preamble sequence is detected, the UE will proceed to step 1030, where it will switch from OFDM monitoring to OOK monitoring so that the UE may obtain subsequently expected binary synchronization sequences.

In various second embodiments, the LP-SS or LP-WUS overlaid OFDM sequence carries a sequence (e.g., a ZC sequence) that copies the contents of the time domain LP-SS or LP-WUS binary sequence for redundancy. In this case the LP-WUR may have prior knowledge of the potential overlaid OFDM sequence format. The LP-WUR first detects the binary sequence carried by the LP-SS or LP-WUS as a first step. This may be done by energy detection using a low-end LP-WUR concept. Utilizing that information, the LP-WUR may determine what overlaid OFDM sequence(s) is/are sent over the "ON" state of OOK symbols. The LP-WUR may then estimate the frequency error based on that received information.

In various embodiments, if overlaid OFDM sequences are sent over LP-SS, they may be used as a preamble/postamble to identify the beginning/end of the binary sequence.

In various embodiments, the overlaid OFDM sequences may be considered as an alternative for the binary sequence sent over the LP-SS to reduce the latency and improve the reliability of the synchronization process. In some embodiments, the overlaid OFDM sequence is short transmission (i.e., smaller than most OOK signaling lengths) sent over LP-SS.

In various embodiments, the overlaid OFDM sequences may be used to carry additional information similar to the PBCH. Examples of such information include some combination of time/frequency window information for the LP-WUS monitoring occasion(s), the periodicity of the LP-WUS monitoring occasions, the dynamic paging occasion information (e.g., the time separation between the LP-WUS and the monitoring occasion), and/or DRX related information.

In various embodiments, the LP-SS signal may carry an overlaid OFDM sequence that is previously known to the receiver for frequency estimation (The OFDM sequence is either pre-defined or carried through RRC signaling or a MAC CE).

In various embodiments, the LP-SS signal may carry an overlaid OFDM sequence (e.g., a ZC sequence) that copies the contents of the binary sequence for frequency estimation.

### UE capability for supporting data-carrying overlaid OFDM sequences:

NR devices utilizing the LP-WUS and WUR paradigms described herein will rely on the presence of two radios (i.e., a low-power radio and a main radio) for power-saving operations. However, as explained in previous sections, there exists multiple variations and capabilities of the LP-WUR, which impact the UE's detection capability with regard to the LP-WUS. In particular, a less-capable receiver (e.g., a legacy UE device) might have only a simple envelope detector and thus will need to receive its LP-WUS using the more universally decodable OOK signaling. On the other hand, a more advanced receiver may rely on detecting the overlaid OFDM sequences within the LP-WUS and accordingly may either obtain the LP-WUS payload faster and more reliably, or may obtain additional information faster, via the overlaid OFDM sequences.

To realize the gains from the overlaid OFDM sequence while ensuring compliance with all types of UEs, the gNB benefits from awareness of the capabilities of the particular UE or UE group to which the gNB will transmit. In particular, it is beneficial for the gNB to be aware of whether the UE has an LP-WUR that is capable of detecting the overlaid OFDM sequences or not so as not to waste time and resources when transmitting the LP-WUS. There are various benefits and corresponding embodiments that when implemented provide for improved gNB and UE communication, such as:

*Sending additional information:* A UE is capable of detecting the overlaid OFDM sequences will allow for the gNB to send additional information by using specific sequences. In a non-representative example, 1 out of 16 sequences may be sent in an OOK symbol to indicate an additional 4-bit ID to the capable UE. This reduces the chances of "false" wake-up by providing additional information regarding the targeted UE ID (e.g., a sub-group ID) that precludes wake-ups by non-targeted UEs within a group. In some embodiments, the gNB may further specify the exact UEs to wake up within a group, rather than waking up all the UEs with the same group ID by utilizing the additional information in the overlaid OFDM sequence.

*Reducing the number of repetitions:* To improve the reliability of the LP-WUS, a gNB may transmit multiple repetitions of the LP-WUS. These repetitions may be sent on multiple consecutive or non-consecutive OOK symbols (e.g., time or frequency multiplexed repetitions). In various embodiments related to time-domain multiplexing, the UE may receive and subsequently parse, in combination, these multiple transmissions in order to enhance the received power. Alternatively, for advanced receivers, less or no repetitions may be needed depending on the UE type, since the same LP-WUS payload may be carried in the OOK-symbols as well as in the overlaid OFDM sequences. In various embodiments, the overlaid OFDM sequences may be utilized to provide additional coding information from the gNB, which may be useful for an advanced receiver radio (e.g., additional CRC bits or an additional redundancy version). This increases resource utilization efficiency by allowing the gNB to either wake-up more devices with the same resources, and/or release these resources to be used for other activities (e.g., downlink transmissions).

*Reducing latency:* The overlaid OFDM sequences may be used to reduce the time needed to acquire the LP-WUS payload. In a non-representative example considering OOK-1 with Manchester coding, 48 OOK symbols might be utilized to carry a 24-bit Group ID payload. Conversely, using 16 overlaid OFDM sequences, each conveying 4-bit of information, means only 12 OOK symbols will be required thus allowing faster activation of the UE from a sleep state (under the assumption that overlaid OFDM symbols are sent only on OOK "ON" symbols and Manchester coding is applied).

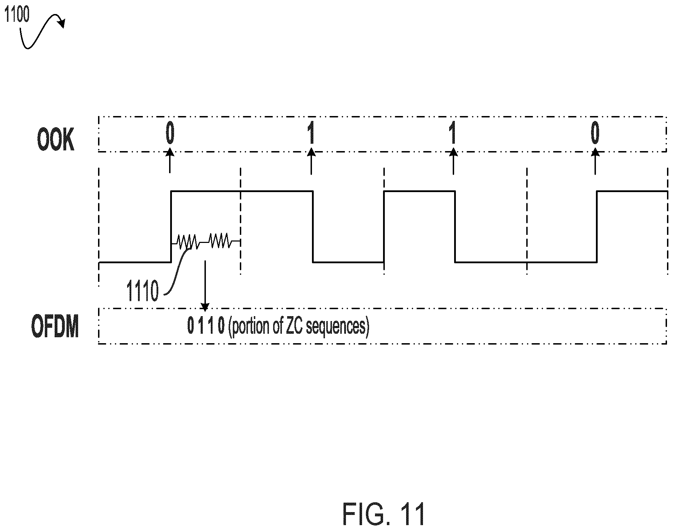

FIG. 11 depicts a phase diagram for a LP-WUS incorporating an overlaid OFDM sequence. Specifically, FIG. 11 depicts a phase diagram 1100 including an OOK symbol 1110 including an overlaid OFDM sequence that may be one of many ZC-based sequences. For example, the overlaid OFDM sequence in symbol 1110 may carry information corresponding to the 4-bit binary "0 - 1 - 1 - 0." However, this single instance of the OFDM sequence is part of a number of ZC sequences that together will carry a smaller set of information to allow for faster activation of the UE from a sleep state.

*Providing additional information for faster access:* In embodiments involving UEs capable of detecting an overlaid OFDM sequence, additional information may be provided to enable faster or more reliable system access. In some embodiments, a dedicated RACH preamble may be provided through the overlaid OFDM sequence to the UE such that it may have a contention free system access. In alternative embodiments, additional information may be provided to the UE such that the UE no longer needs to monitor for paging early occasions and may accordingly monitor the first upcoming paging occasion instead. In some embodiments, the additional information may include one or more indications of a paging occasion. For example, indication may correspond to a paging occasion that the UE should monitor if the gNB is not aware of the UE capability, particularly if the gNB is not aware whether the UE supports overlaid OFDM sequence detection. In some embodiments, a UE with OFDM sequence detection capability may detect the additional information and accordingly target a faster PO to reduce latency as indicated by the information carried in the overlaid OFDM sequence. In some embodiments, the overlaid OFDM sequence may also indicate whether a UE should monitor a dynamic PO, or a legacy PO, to have better control on latency (A dynamic PO appears after a pre-defined/pre-configured duration from the LP-WUS).

As described above, a UE may share its operational capability with the gNB directly or indirectly, in order to improve subsequent communication with the gNB with respect to LP-WUS. In various embodiments, when exchanging its capability, the UE may indicate to the gNB one or more of the following:
- With respect to the LP-WUS, the UE may share one or more of:
   ∘ The ability of the UE to detect only OOK symbols, OOK symbols and overlaid OFDM sequences, and/or overlaid OFDM sequences only;
   ∘ The support of *Option1* or *Option2* for OFDM sequence overlaying (i.e., the transmission of additional information or redundant information using the overlaid OFDM sequences);
   ∘ The number of OFDM sequence correlations the UE may perform within one OOK symbol;
   ∘ The processing latency of an overlaid OFDM sequence (i.e., minimum time required between two consecutive overlaid OFDM sequences);
   ∘ The minimum processing time required between two consecutive LP-WUS payloads for processing (i.e., a minimum processing time gap).
   ∘ The minimum separation between an LP-WUS and the corresponding PO monitoring occasion; and/or
   ∘ The minimum separation between an LP-WUS and the corresponding PDCCH monitoring occasion.
- With respect to the LP-SS, the UE may share:
   ∘ The ability to detect only OOK symbols, OOK symbols and overlaid OFDM sequences, and/or overlaid OFDM sequences only; and/or
   ∘ The ability to use the overlaid OFDM sequences for synchronization or SFO estimation.

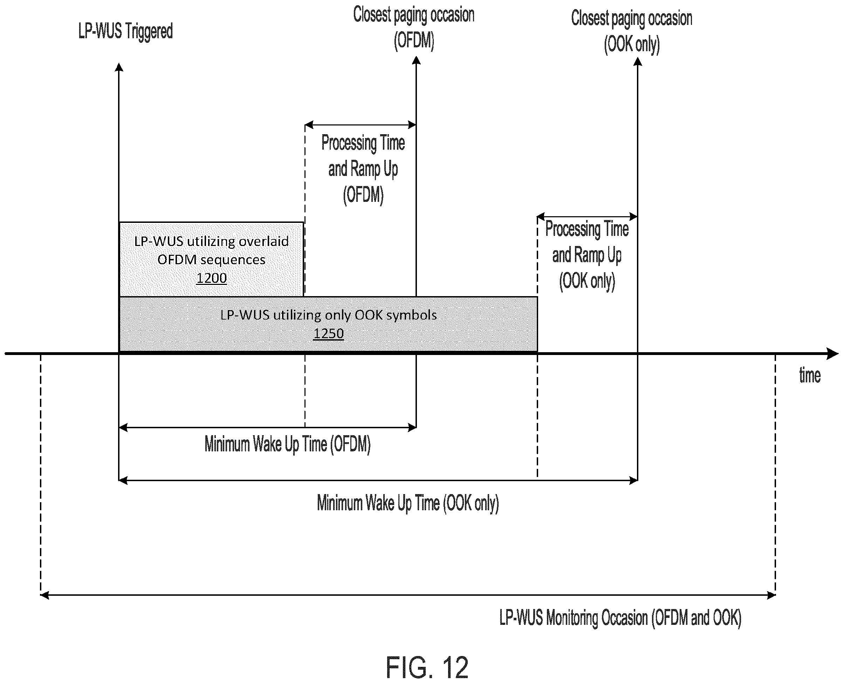

According to the embodiments described herein, the minimum time required between the LP-WUS being received and the corresponding PO can be significantly reduced, as shown in FIG. 12. FIG. 12 depicts a time chart showing the difference between a LP-WUS utilizing overlaid OFDM sequences 1200 and a LP-WUS utilizing only OOK symbols 1250. As depicted in FIG. 12, a LP-WUS monitoring occasion occurs just before the LP-WUS reception occurs at a UE device. The reception of the LP-WUS for the LP-WUS utilizing overlaid OFDM sequences 1200 and the LP-WUS utilizing only OOK symbols 1250 triggers a minimum wakeup time period before the main radio may begin regular operation. However, as depicted in FIG. 12, the wakeup time includes a processing time and ramp up period following the completion of the decoding of the signal. Because the OFDM sequences may carry larger payloads than OOK symbols, the OFDM sequences will be decoded by the LP-WUR earlier and thus the ramp-up period begins earlier. This shows how the use of OFDM sequences will wakeup the main radio faster than OOK symbols in many cases.

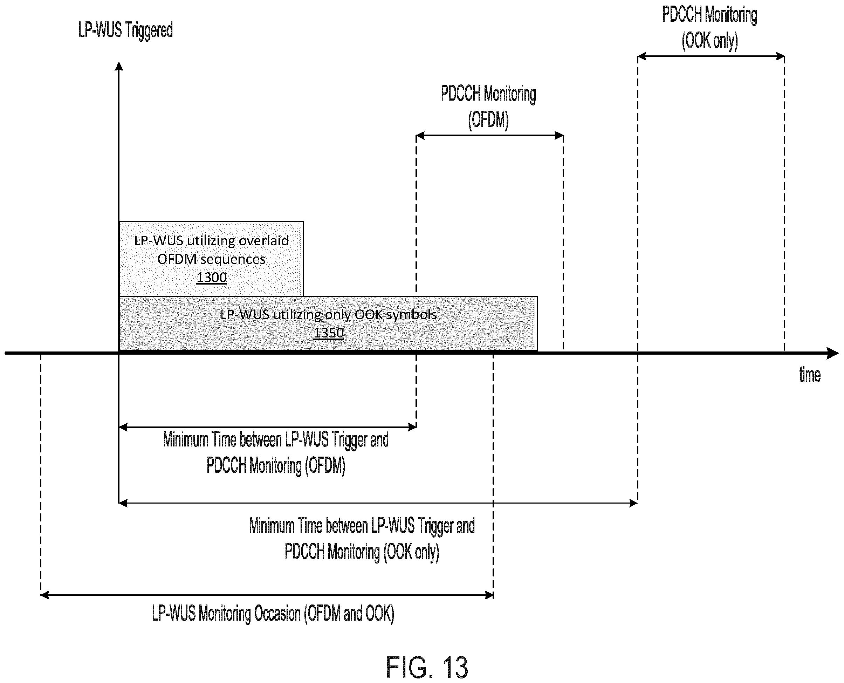

In addition, the minimum duration between the transmission of the LP-WUS and the corresponding PDCCH can be significantly reduced, as shown in Figure 13. In such embodiments, the UE is assumed to be scheduled to a closer PO/PDCCH after LP-WUS transmission. FIG. 13 depicts a time chart showing the difference between a LP-WUR utilizing overlaid OFDM sequences 1300 and a LP-WUR utilizing only OOK symbols 1350. Similar to FIG. 12, FIG. 13 depicts a LP-WUS monitoring occasion occurring just before the LP-WUS reception occurs at a UE device. Similar to the minimum wakeup period of FIG. 12, FIG. 13 includes a minimum time between LP-WUS receptions and PDCCH monitoring. However, because a LP-WUS utilizing overlaid OFDM sequences 1300 can be decoded before the LP-WUS utilizing only OOK symbols 1350, an OFDM-compliant UE may begin the PDCCH monitoring period earlier. This means that an OFDM-compliant UE may receive a PDCCH sooner than a UE that is only OOK-compliant.

In various embodiments, the minimum timing between an LP-WUS and a corresponding Paging Early Indication (PEI) or PO may be dependent on the presence of overlaid OFDM sequences. For example, the overlaid OFDM sequences contained in a LP-WUS may contain information pertaining to an upcoming PO from the gNB. The UE may responsively begin monitoring for the PO after a minimum time has passed that the UE determines based on the information in the OFDM sequence.

Another opportunity to improve LP-WUS paradigms involves whether a UE is expected to detect overlaid OFDM sequences. Particularly, due to its potential for higher power consumption and complexity, a UE may not always perform OFDM sequence detection despite of its capability (e.g., UE is separately put into a "power-saving" state by an end user). In such cases, the detection of the overlaid OFDM sequences may be dependent on the UE's state (e.g., a UE may detect the overlaid OFDM sequences when it is in a current connectivity state of "connected" mode and resort to OOK sequence detection when in "idle/inactive/power-saving" connectivity states). In various embodiments, a UE may utilize RRC signaling to notify to a gNB that it will perform overlaid OFDM sequence detection only when it is in connected mode. The gNB may responsively alter the manner in which it sends future LP-WUS to the UE, for example the timing, format, and/or signal contents of the transmission and particularly the overlaid OFDM sequence.

In various embodiments, a UE may indicate whether it will attempt to detect overlaid OFDM sequences or not, despite its capability. For example, for some devices that have alternative sources of energy (e.g., solar power), the devices may tolerate the higher power consumption of overlaid OFDM sequence detection when in an energy rich environment (e.g., solar cells are currently generating energy). Conversely, the UE may have limited capabilities at particular times and thus might be able to detect only the OOK symbols at these times (e.g., at nighttime).

In various embodiments, a UE device may alternate between overlaid OFDM sequence detection and OOK symbol detection based on an expected wake-up time (e.g., as indicated by higher layers). For example, if a device is expected to be awaken every 10 minutes, and otherwise is in deep sleep, then this device may perform OOK symbols detection only during the first 9 minutes of sleep, then switch to Overlaid OFDM sequence detection in the last minute before its expected awakening time. In various embodiments, the UE may be expected to use RRC signaling to indicate to the gNB its expected awakening time, such that the gNB is aware of an optimal time window for when to send the overlaid OFDM sequences.

In various embodiments, an RRC pre-configured window may be used for overlaid OFDM sequence monitoring. In some embodiments, overlaid OFDM sequences and their locations are utilized to carry the LP-WUS payload. In various embodiments, a UE may indicate by RRC signaling if it detects the overlaid OFDM sequence or not. In some embodiments, this occurs if the UE previously indicated the overlaid OFDM sequence detection capability. In various embodiments, a UE in an "always-on" mode may always be expected to decode the overlaid OFDM sequence. In various embodiments involve energy-time dependent UE devices, the presence of additional or fewer energy sources may impact the UE's ability to perform overlaid OFDM sequence detection at given instances, and may must be notified to the gNB, for example through RRC signaling (e.g., a UE might be able to perform overlaid OFDM sequence detection only when solar energy is present). In some embodiments, to save power, a UE may perform overlaid OFDM sequence detection for a short duration before its expected awakening time that is either (pre)-defined or (pre)-configured through RRC signaling.

In various embodiments, adjusting the overlaid OFDM sequence set size may be performed based on reported UE capability through downlink signaling.

In various embodiments, a pre-configured gap between OOK symbols with overlaid OFDM sequences may be utilized as information and considered in signal processing.

In various embodiments, using a pre-configured overlaid OFDM sequence monitoring window is utilized to reduce complexity. In various further embodiments, the duration over which OFDM sequence detection is performed by the UE may be (pre)-defined and/or (pre)-configured through RRC signaling. Such a configuration will allow the gNB to identify when to send the overlaid OFDM sequences carrying information to the targeted devices.

In various embodiments, one or more overlaid OFDM sequences may be used to carry broadcast information, such as configuration information which may be used to facilitate various communications between 5G, WiFi, or similar devices. In various embodiments, the binary and overlaid OFDM sequences for frequency synchronization are utilized jointly to increase redundancy or payload amount.

In various embodiments, the enabling/disabling of overlaid OFDM sequence detection is based on a metric (e.g., measured power state above/below a threshold).

In various embodiments, one or more OFDM sequences mappable to one or more code points within a codeblock representing communication control signals, for example, as part of 5G device communication operations.

In various embodiments, one or more downlink frequency estimations for downlink synchronization may be determined from communication data, such as a binary sequence send via the OOK format and/or one or more overlaid OFDM sequences. In some embodiments, a UE may utilize one or more downlink frequency estimations to better synchronize UE radios to receive a concurrent or future downlink communication.

In various embodiments, one or more overlaid OFDM sequences may carry comprises master information block (MIB) information including data related to concurrent or future communications with a base station, similar to processes that may be performed in 5G communication.

### Example System Architecture

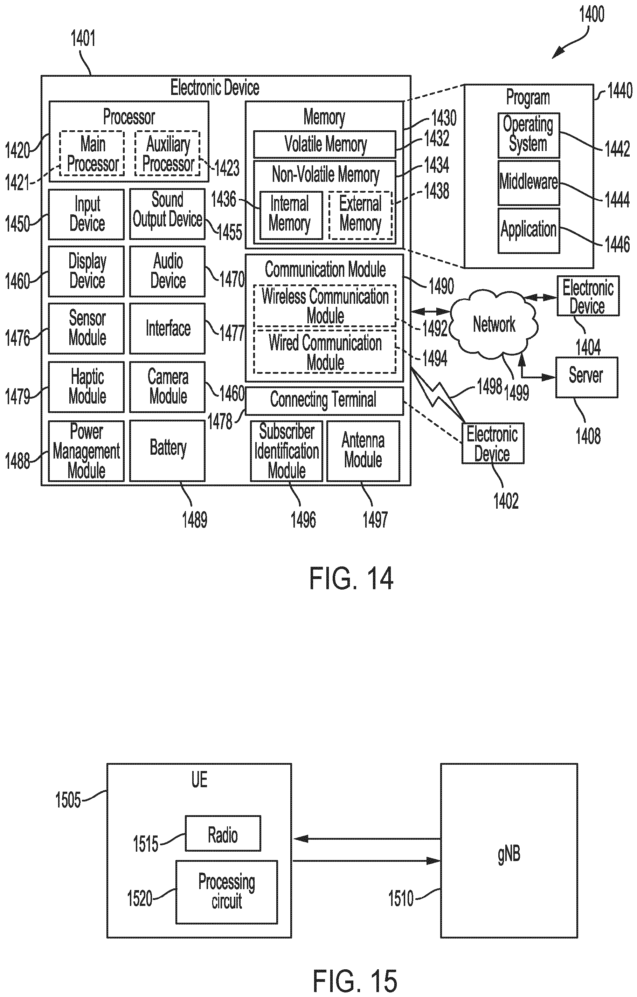

FIG. 14 is a block diagram of an electronic device in a network environment 600, according to an embodiment. The electronic device of FIG. 6 may comprise the receiving UE or transmitting UE performing the functions and embodiments described herein, such as those illustrated in FIGS. 1-13.

Referring to FIG. 14, an electronic device 1401 in a network environment 1400 may communicate with an electronic device 1402 via a first network 1498 (e.g., a short-range wireless communication network), or an electronic device 1404 or a server 1408 via a second network 1499 (e.g., a long-range wireless communication network). The electronic device 1401 may communicate with the electronic device 1404 via the server 1408. The electronic device 1401 may include a processor 1420, a memory 1430, an input device 1440, a sound output device 1455, a display device 1460, an audio module 1470, a sensor module 1476, an interface 1477, a haptic module 1479, a camera module 1480, a power management module 1488, a battery 1489, a communication module 1490, a subscriber identification module (SIM) card 1496, or an antenna module 1494. **In** one embodiment, at least one (e.g., the display device 1460 or the camera module 1480) of the components may be omitted from the electronic device 1401, or one or more other components may be added to the electronic device 1401. Some of the components may be implemented as a single integrated circuit (IC). For example, the sensor module 1476 (e.g., a fingerprint sensor, an iris sensor, or an illuminance sensor) may be embedded in the display device 1460 (e.g., a display).

The processor 1420 may execute software (e.g., a program 1440) to control at least one other component (e.g., a hardware or a software component) of the electronic device 1401 coupled with the processor 1420 and may perform various data processing or computations.

As at least part of the data processing or computations, the processor 1420 may load a command or data received from another component (e.g., the sensor module 1446 or the communication module 1490) in volatile memory 1432, process the command or the data stored in the volatile memory 1432, and store resulting data in non-volatile memory 1434. The processor 1420 may include a main processor 1421 (e.g., a central processing unit (CPU) or an application processor (AP)), and an auxiliary processor 1423 (e.g., a graphics processing unit (GPU), an image signal processor (ISP), a sensor hub processor, or a communication processor (CP)) that is operable independently from, or in conjunction with, the main processor 1421. Additionally, or alternatively, the auxiliary processor 1423 may be adapted to consume less power than the main processor 1421, or execute a particular function. The auxiliary processor 1423 may be implemented as being separate from, or a part of, the main processor 1421.

The auxiliary processor 1423 may control at least some of the functions or states related to at least one component (e.g., the display device 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). The auxiliary processor 1423 (e.g., an image signal processor or a communication processor) may be implemented as part of another component (e.g., the camera module 1480 or the communication module 1490) functionally related to the auxiliary processor 1423.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input device 1450 may receive a command or data to be used by another component (e.g., the processor 1420) of the electronic device 1401, from the outside (e.g., a user) of the electronic device 1401. The input device 1450 may include, for example, a microphone, a mouse, or a keyboard.

The sound output device 1455 may output sound signals to the outside of the electronic device 1401. The sound output device 1455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1460 may visually provide information to the outside (e.g., a user) of the electronic device 1401. The display device 1460 may include, for example, a display, a hologram device, or a projector and control circuitry to control a corresponding one of the display, hologram device, and projector. The display device 1460 may include touch circuitry adapted to detect a touch, or sensor circuitry (e.g., a pressure sensor) adapted to measure the intensity of force incurred by the touch.

The audio module 1470 may convert a sound into an electrical signal and vice versa. The audio module 1470 may obtain the sound via the input device 1450 or output the sound via the sound output device 1455 or a headphone of an external electronic device 1402 directly (e.g., wired) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. The sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device 1402 directly (e.g., wired) or wirelessly. The interface 1477 may include, for example, a high- definition multimedia interface (HDMI), a universal serial bus (USB) interface, a secure digital (SD) card interface, or an audio interface.

A connecting terminal 1478 may include a connector via which the electronic device 1401 may be physically connected with the external electronic device 1402. The connecting terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a movement) or an electrical stimulus which may be recognized by a user via tactile sensation or kinesthetic sensation. The haptic module 1479 may include, for example, a motor, a piezoelectric element, or an electrical stimulator.

The camera module 1480 may capture a still image or moving images. The camera module 1480 may include one or more lenses, image sensors, image signal processors, or flashes. The power management module 1488 may manage power supplied to the electronic device 1401. The power management module 1488 may be implemented as at least part of, for example, a power management integrated circuit (PMIC).

The battery 1489 may supply power to at least one component of the electronic device 1401. The battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the AP) and supports a direct (e.g., wired) communication or a wireless communication. The communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as BluetoothTM, wireless-fidelity (Wi-Fi) direct, or a standard of the Infrared Data Association (IrDA)) or the second network 1499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The antenna module 1497 may transmit or receive a signal or power to or from the outside (e.g., the external electronic device) of the electronic device 1401. The antenna module 1497 may include one or more antennas, and, therefrom, at least one antenna appropriate for a communication scheme used in the communication network, such as the first network 1498 or the second network 1499, may be selected, for example, by the communication module 1490 (e.g., the wireless communication module 1492). The signal or the power may then be transmitted or received between the communication module 1490 and the external electronic device via the selected at least one antenna.

Commands or data may be transmitted or received between the electronic device 1401 and the external electronic device 1404 via the server 1408 coupled with the second network 1499. Each of the electronic devices 1402 and 1404 may be a device of a same type as, or a different type, from the electronic device 1401. All or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1401. The electronic device 1401 may provide the outcome, with or without further processing of the outcome, as at least part of a reply to the request. To that end, a cloud computing, distributed computing, or client-server computing technology may be used, for example.

FIG. 15 shows a system including a UE 1505 and a gNB 1510, in communication with each other. The UE may include a radio 1515 and a processing circuit (or a means for processing) 1520, which may perform various methods disclosed herein. For example, the processing circuit 1520 may receive, via the radio 1515, transmissions from the network node (gNB) 1510, and the processing circuit 1520 may transmit, via the radio 1515, signals to the gNB 1510.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively, or additionally, the program instructions may be encoded on an artificially-generated propagated signal, e.g., a machine-generated electrical, optical, or electromagnetic signal, which is generated to encode information for transmission to suitable receiver apparatus for execution by a data processing apparatus. A computer-storage medium may be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium may also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method comprising:
receiving, by a user equipment (UE), a communication signal, the communication signal comprising first data in an on-off keying (OOK) format and second data in an overlaid orthogonal frequency division multiplexing (OFDM) format;
determining, by the UE, a low-power wake up signal (LP-WUS) by decoding the communication signal, wherein the LP-WUS is determined at least by decoding the second data in the overlaid OFDM format; and
activating, by the UE, based on the determined LP-WUS, a main radio for receiving wireless communications.

2. The method of claim 1, wherein decoding the second data in an overlaid OFDM format comprises decoding at least a first portion of the second data based on data carried by one or more OFDM sequences and second portion of the second data based on a symbol position of the one or more OFDM sequences.

3. The method of claim 1, further comprising:
monitoring, by the UE, for a communication signal including data in an OOK format only;
in response to receiving the communication signal comprising the first data in an OOK format, determining UE group identification data from among the first data; and
in response to determining the UE group identification data, monitoring for data in the overlaid OFDM format.

4. The method of claim 3, wherein monitoring for data in the overlaid OFDM format is performed only for pre-configured duration of time.

5. The method of claim 3, further comprising:
determining UE individual identification data from among the second data; and
terminating monitoring for data in the overlaid OFDM format in response to determining the UE individual identification data.

6. The method of claim 1, further comprising:
monitoring, by the UE, for a communication signal including data in an OOK format only;
in response to receiving the communication signal comprising the first data in an OOK format, monitoring for data in an overlaid OFDM format; and
determining, based on the LP-WUS, a paging occasion for the UE.

7. The method of claim 1, wherein the second data in the overlaid OFDM format comprises a plurality of OFDM sequences.

8. The method of claim 7, wherein:
two or more of the plurality of overlaid OFDM sequences contain distinct UE identification data; and
the method further comprises determining, by the UE, that at least one overlaid OFDM sequence of the plurality of overlaid OFDM sequences contains UE identification data corresponding to the UE.

9. The method of claim 1, wherein the second data comprises one or more OFDM sequences in a Zadoff-Chu (ZC) sequence format.

10. The method of claim 1, wherein the second data comprises one or more OFDM sequences mappable to one or more code points within a codeblock representing communication control signals.

11. A method comprising:
receiving, by a user equipment (UE), a communication synchronization signal, the communication synchonrization signal comprising first data in an on-off keying (OOK) format and second data in an overlaid orthogonal frequency division multiplexing (OFDM) format, wherein the first data comprises a binary sequence for device synchronization; and
configuring, by the UE, based on the communication synchronization signal, one or more UE radios for downlink communications.

12. The method of claim 11, wherein:
the second data in the overlaid OFDM format comprises preamble sequence synchronization data; and
the preamble sequence synchronization data comprises an indication of a first bit of the binary sequence for device synchronization.

13. The method of claim 11, wherein:
the second data in the overlaid OFDM format comprises postamble sequence synchronization data; and
the postamble sequence synchronization data comprises an indication of a final bit of the binary sequence for device synchronization.

14. The method of claim 11, wherein:
the second data comprises one or more overlaid OFDM sequences for configuring the one or more UE radios for downlink communications; and
the UE is preconfigured with decoding data to decode the one or more overlaid OFDM sequences sent as part of the second data.

15. The method of claim 11, wherein:
the second data comprises one or more overlaid OFDM sequences for configuring the one or more UE radios for downlink communications; and
configuring the one or more UE radios for downlink communications is based only on the one or more overlaid OFDM sequences.

16. The method of claim 11, wherein the communication synchronization signal comprises a plurality of overlaid OFDM sequences in adjacent OOK symbols of the communication synchronization signal.

17. The method of claim 11, wherein the second data in the overlaid OFDM format comprises one or more overlaid OFDM sequences in a Zadoff-Chu (ZC) sequence format.

18. The method of claim 11, wherein:
the second data in the overlaid OFDM format comprises one or more overlaid OFDM sequences;
the method further comprises determining one or more downlink frequency estimations from the binary sequence for device synchronization and the one or more overlaid OFDM sequences; and
configuring the one or more UE radios is further based on the one or more downlink frequency estimations.

19. The method of claim 11, wherein:
the second data in the overlaid OFDM format comprises one or more overlaid OFDM sequences; and
the one or more overlaid OFDM sequences comprises master information block (MIB) information for communicating with a base station.

20. A UE device comprising:
a low-power wake-up receiver (LP-WUR) radio including a processor;
a main radio;
a memory including instructions, wherein when the instructions are executed by the processor, the LP-WUR is configured to:
receive a communication signal, the communication signal comprising first data in an on-off keying (OOK) format and second data in an overlaid orthogonal frequency division multiplexing (OFDM) format;
determine a low-power wake up signal (LP-WUS) by decoding the communication signal, wherein the LP-WUS is determined at least by decoding the second data in the overlaid OFDM format; and
activate, based on the decoded LP-WUS, the main radio for receiving wireless communications.
